# EUROPEAN PATENT APPLICATION

(11) **EP 4 439 120 A1**
(43) Date of publication of application: **02.10.2024**
(21) Application number: 22897727.8
(22) Date of filing: 18.11.2022
(51) Int. Cl.: G01S 13/75, H04B 7/22

(54) **WIRELESS SENSING METHOD AND APPARATUS, AND NETWORK SIDE DEVICE AND TERMINAL**

(30) Priority: 25.11.2021 CN 202111416099
(71) Applicant: Vivo Mobile Communication Co., Ltd., Dongguan, Guangdong 523863 (CN)
(72) Inventor: LI, Jianzhi, Dongguan, Guangdong 523863 (CN); JIANG, Dajie, Dongguan, Guangdong 523863 (CN); YAO, Jian, Dongguan, Guangdong 523863 (CN); WU, Jianming, Dongguan, Guangdong 523863 (CN)
(74) Representative: Lavoix
(86) International application number: PCT/CN2022/132923
(87) International publication number: WO 2023/093644

(57) **Abstract**

Disclosed are a wireless sensing method and apparatus, a network-side device, and a terminal, belonging to the technical field of communications. The wireless sensing method includes: A first device backscatters a sensing signal to a wireless sensing signal receiver. The sensing signal is from a wireless sensing signal transmitter.

## Description

### CROSS-REFERENCE TO RELATED APPLICATIONS

This application claims priority to Chinese Patent Application No. 202111416099. X filed on November 25, 2021, which is incorporated herein by reference in its entirety.

### TECHNICAL FIELD

This application belongs to the technical field of communications, and more particularly relates to a wireless sensing method and apparatus, a network-side device, and a terminal.

### BACKGROUND

In the related art, sensing and communication systems are usually designed separately and occupy different bands. Due to the extensive deployment of millimeter wave and a multi input multi output (Multiple Input Multiple Output, MIMO) technology, communication signals in future wireless communication systems often have high resolution in time domain and angle domain, which makes it possible to realize high-precision sensing by using the communication signals. Therefore, it is preferable to jointly design the sensing and communication systems, so that the sensing and communication systems can share the same band and hardware, so as to improve frequency efficiency and reduce hardware costs. The research of integrated sensing and communication (Integrated Sensing And Communication, ISAC) is promoted.

However, in the ISAC scenario, sensing devices using traditional radio architecture include power-consuming radio frequency links, including oscillators, mixers, and digital-to-analog converters, which lead to a large size of sensing devices and a short battery life, thereby limiting the layout of the sensing devices in the ISAC and then limiting the sensing performance of an ISAC system.

### SUMMARY

Embodiments of this application provide a wireless sensing method and apparatus, a network-side device, and a terminal, which can improve the sensing performance of an ISAC system.

According to a first aspect, a wireless sensing method is provided. The method includes:

A first device backscatters a sensing signal to a wireless sensing signal receiver, where the sensing signal is from a wireless sensing signal transmitter.

According to a second aspect, a wireless sensing apparatus is provided. The apparatus is applied to a first device. The apparatus includes:
a backscatter module, configured to backscatter a sensing signal to a wireless sensing signal receiver, where the sensing signal is from a wireless sensing signal transmitter.

According to a third aspect, a wireless sensing method is provided. The method includes:

A wireless sensing signal receiver acquires second information, where the second information includes: sensing demand information and/or sensing signal related configuration information corresponding to the sensing demand information.

The wireless sensing signal receiver measures a sensing signal that is transmitted by a wireless sensing signal transmitter and at least partially backscattered by a first device according to the sensing signal related configuration information, so as to acquire a target measurement quantity.

The wireless sensing signal receiver determines a target sensing result according to the target measurement quantity, or transmits the target measurement quantity.

According to a fourth aspect, a wireless sensing apparatus is provided. The apparatus is applied to a wireless sensing signal receiver. The apparatus includes:
a first acquisition module, configured to acquire second information, where the second information includes: sensing demand information and/or sensing signal related configuration information corresponding to the sensing demand information;
a measurement module, configured to measure a sensing signal that is transmitted by a wireless sensing signal transmitter and at least partially backscattered by a first device according to the sensing signal related configuration information, so as to acquire a target measurement quantity; and
an execution module, configured to determine a target sensing result according to the target measurement quantity, or transmit the target measurement quantity.

According to a fifth aspect, a wireless sensing method is provided. The method includes:
A second device acquires sensing demand information.

The second device transmits second information to at least one of a wireless sensing signal transmitter and a wireless sensing signal receiver, where the second information includes: the sensing demand information and/or sensing signal related configuration information corresponding to the sensing demand information.

The second device acquires at least one of a target measurement quantity and a target sensing result, where the target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

According to a sixth aspect, a wireless sensing apparatus is provided. The apparatus is applied to a second device. The apparatus includes:
a second acquisition module, configured to acquire sensing demand information;
a second transmitting module, configured to transmit second information to at least one of a wireless sensing signal transmitter and a wireless sensing signal receiver, where the second information includes: the sensing demand information and/or sensing signal related configuration information corresponding to the sensing demand information; and
a third acquisition module, configured to acquire at least one of a target measurement quantity and a target sensing result, where the target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

According to a seventh aspect, a wireless sensing system is provided, including: a first device, a wireless sensing signal transmitter, and a wireless sensing signal receiver.

At least one of the wireless sensing signal transmitter and the wireless sensing signal receiver is configured to acquire second information. The first information includes: sensing demand information and/or sensing signal related configuration information corresponding to the sensing demand information.

The wireless sensing signal transmitter is configured to determine the sensing signal related configuration information according to the sensing demand information, and transmit a sensing signal according to the sensing signal related configuration information, or, the wireless sensing signal transmitter is configured to transmit a sensing signal according to the acquired sensing signal related configuration information.

The first device is configured to backscatter the sensing signal.

The wireless sensing signal receiver is configured to measure the sensing signal that is transmitted by the wireless sensing signal transmitter and at least partially backscattered by the first device, so as to obtain a target measurement quantity.

According to an eighth aspect, a terminal is provided. The terminal includes a processor and a memory. The memory stores programs or instructions executable on the processor. The programs or instructions, when executed by the processor, implement steps of the method as described in the third aspect.

According to a ninth aspect, a terminal is provided. The terminal includes a processor and a communication interface. The communication interface is configured to acquire second information. The second information includes: sensing demand information and/or sensing signal related configuration information corresponding to the sensing demand information. The communication interface is further configured to measure a sensing signal that is transmitted by a wireless sensing signal transmitter and at least partially backscattered by a first device according to the sensing signal related configuration information, so as to acquire a target measurement quantity. The processor is configured to determine a target sensing result according to the target measurement quantity, or transmit the target measurement quantity.

According to a tenth aspect, a network-side device is provided. The network-side device includes a processor and a memory. The memory stores programs or instructions executable on the processor. The programs or instructions, when executed by the processor, implement steps of the method as described in the third aspect or the fifth aspect.

According to an eleventh aspect, a network-side device is provided, including a processor and a communication interface. The communication interface is configured to acquire second information. The second information includes: sensing demand information and/or sensing signal related configuration information corresponding to the sensing demand information. The communication interface is further configured to measure a sensing signal that is transmitted by a wireless sensing signal transmitter and at least partially backscattered by a first device according to the sensing signal related configuration information, so as to acquire a target measurement quantity. The processor is configured to determine a target sensing result according to the target measurement quantity, or transmit the target measurement quantity.

Or:
The communication interface is configured to acquire sensing demand information, and transmit second information to at least one of a wireless sensing signal transmitter and a wireless sensing signal receiver. The second information includes: the sensing demand information and/or sensing signal related configuration information corresponding to the sensing demand information. The communication interface is further configured to acquire at least one of a target measurement quantity and a target sensing result. The target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

According to a twelfth aspect, a wireless sensing system is provided, including: a terminal and a network-side device. The terminal may be configured to perform steps of the wireless sensing method as described in the third aspect. The network-side device may be configured to perform steps of the wireless sensing method as described in the fifth aspect. Alternatively, the network-side device may be configured to perform steps of the wireless sensing method as described in the third aspect and the fifth aspect.

According to a thirteenth aspect, a readable storage medium is provided. The readable storage medium stores programs or instructions. The programs or instructions, when executed by a processor, implement steps of the method as described in the first aspect, implement steps of the method as described in the third aspect, or implement steps of the method as described in the fifth aspect.

According to a fourteenth aspect, a chip is provided. The chip includes a processor and a communication interface. The communication interface is coupled to the processor. The processor is configured to execute programs or instructions to implement the method as described in the first aspect, implement the method as described in the third aspect, or implement the method as described in the fifth aspect.

According to a fifteenth aspect, a computer program product is provided. The computer program product is stored in a storage medium. The computer program product is executed by at least one processor to implement steps of the wireless sensing method as described in the first aspect, the third aspect, or the fifth aspect.

In this embodiment of this application, a first device backscatters a sensing signal to a wireless sensing signal receiver, where the sensing signal is from a wireless sensing signal transmitter. In this way, the sensing signal transmitted by the wireless sensing signal transmitter is backscattered to the wireless sensing signal receiver by using a backscatter function of the first device, and an additional sensing path may be provided for wireless sensing through the backscatter function of the first device. Furthermore, the first device having the backscatter function may not have a power-consuming radio frequency link, and thus has the characteristics of small size, small power consumption, and the like. Compared with the wireless sensing signal transmitter and receiver, the first device is more conveniently arranged in an ISAC system to improve the sensing performance of the ISAC system.

### BRIEF DESCRIPTION OF THE DRAWINGS

FIG. 1 is a schematic diagram depicting a structure of a wireless communication system to which embodiments of this application can be applied;
FIG. 2 is a flowchart of a first wireless sensing method according to embodiments of this application;
FIG. 3a is a first schematic diagram of a wireless sensing system adopting a wireless sensing method according to embodiments of this application;
FIG. 3b is a second schematic diagram of a wireless sensing system adopting a wireless sensing method according to embodiments of this application;
FIG. 3c is a third schematic diagram of a wireless sensing system adopting a wireless sensing method according to embodiments of this application;
FIG. 4 is a flowchart of a second wireless sensing method according to embodiments of this application;
FIG. 5 is a flowchart of a third wireless sensing method according to embodiments of this application;
FIG. 6 is a first schematic diagram of information interaction in a wireless sensing method according to embodiments of this application;
FIG. 7 is a second schematic diagram of information interaction in a wireless sensing method according to embodiments of this application;
FIG. 8 is a schematic diagram depicting a structure of a first wireless sensing apparatus according to embodiments of this application;
FIG. 9 is a schematic diagram depicting a structure of a second wireless sensing apparatus according to embodiments of this application;
FIG. 10 is a schematic diagram depicting a structure of a third wireless sensing apparatus according to embodiments of this application;
FIG. 11 is a schematic diagram depicting a structure of a communication device according to embodiments of this application;
FIG. 12 is a schematic diagram depicting a structure of a terminal according to embodiments of this application;
FIG. 13 is a schematic diagram depicting a structure of a network-side device according to embodiments of this application; and
FIG. 14 is a schematic diagram depicting a structure of another network-side device according to embodiments of this application.

### DETAILED DESCRIPTION

The technical solutions in embodiments of this application are clearly and completely described in the following with reference to the accompanying drawings in embodiments of this application. Apparently, the described embodiments are merely some rather than all of the embodiments of this application. All other embodiments obtained by those skilled in the art based on embodiments of this application fall within the protection scope of this application.

The terms "first", "second", and the like in the specification and claims of this application are used to distinguish similar objects and are not used to describe a particular order or priority. It should be understood that the terms so used are interchangeable where appropriate, whereby embodiments of this application can be practiced in an order other than those illustrated or described herein, and that the objects distinguished by "first" and "second" are generally one class and the number of objects is not limited. For example, there may be one or more first objects. Furthermore, "and/or" in the specification and claims represents at least one of the connected objects, and the character "/" generally represents that the associated objects are in an "or" relationship.

It is to be noted that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in embodiments of this application are often used interchangeably, and the described techniques may be used for both the above-mentioned systems and radio technologies and for other systems and radio technologies. The following description describes a new radio (New Radio, NR) system for example purposes and uses the NR term in most of the following descriptions, but these technologies may also be applied to applications other than NR system applications, such as 6th generation (6th Generation, 6G) communication systems.

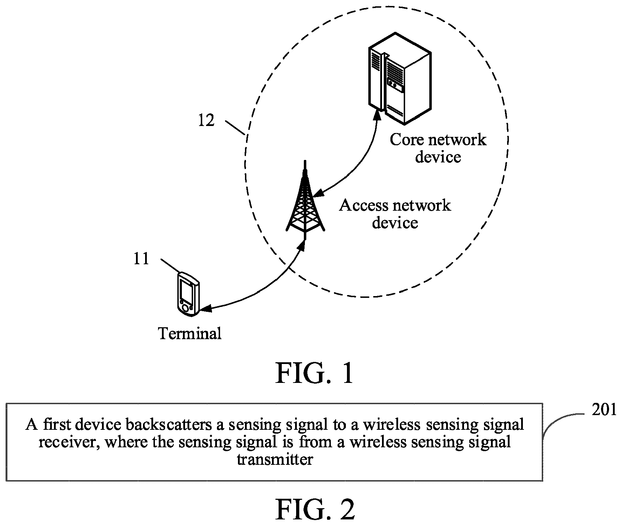

FIG. 1 shows a block diagram of a wireless communication system to which embodiments of this application are applicable. The wireless communication system includes a terminal 11 and a network-side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home (home equipment having a wireless communication function, such as a refrigerator, a TV set, a laundry machine or furniture), a game console, a personal computer (personal computer, PC), a teller machine or an automatic teller machine, or other terminal-side devices. The wearable device includes: smart watches, smart bands, smart headphones, smart glasses, smart jewelry (smart bracelets, smart chain bracelets, smart rings, smart necklaces, smart chain anklets, and the like), smart wristbands, smart clothing, and the like. It should be noted that the specific type of the terminal 11 is not limited in this embodiment of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmit receive point (Transmit Receive Point, TRP), or some other suitable terms in the art. The base station is not limited to specific technical vocabulary, provided that the same technical effect is achieved. It should be noted that in this embodiment of this application, only a base station in an NR system is described as an example, but the specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in this embodiment of this application, only a core network device in an NR system is described as an example, but the specific type of the core network device is not limited.

First, in recent decades, wireless communication and radar sensing (Communication&Sensing, C&S) have been developing in parallel, but the intersection is limited. The communication and the sensing have a lot in common in signal processing algorithms, devices and, to a certain extent, system architecture. In recent years, more and more researchers have paid attention to the coexistence, cooperation, and joint design of the two systems.

The coexistence of the communication system and the radar system has been extensively researched in the early days, and the research focuses on developing an effective interference management technology, so that two separately deployed systems can run smoothly without interfering with each other. Although the radar and communication systems may be located in the same place or even physically integrated, the systems transmit two different signals in time/frequency domain. The systems share the same resources through cooperation to minimize interference with each other when working at the same time. Corresponding measures include beamforming, cooperative spectrum sharing, primary and secondary spectrum sharing, dynamic coexistence, and the like. However, effective interference cancellation usually has strict requirements on the mobility of nodes and information exchange between nodes, and therefore, the improvement of spectrum efficiency is limited in practice. Since interference in coexisting systems is caused by the transmission of two independent signals, it is natural to determine whether one transmitted signal can be used for the communication and the radar sensing at the same time. The radar system usually uses specially designed waveforms, such as short pulses and chirps, which can achieve high power radiation and simplify receiver processing. However, these waveforms are not necessary for radar detection. It is a good example to use different radio signals as sensing signals for passive radar or passive sensing.

Machine learning, especially depth learning, further promotes the potential of non-dedicated radio signals for radar sensing. With these technologies, traditional radar is developing towards more general wireless sensing. Wireless sensing herein may broadly refer to retrieving information from a received radio signal rather than communication data modulated to the signal at a transmitter. For wireless sensing related to a location of a sensing target, dynamic parameters such as a reflection delay, an angle of arrival (Angle of Arrival, AOA), an angle of departure (Angle of Departure, AOD), and Doppler of a target signal may be estimated by common signal processing methods. Physical characteristics of the sensing target may be realized by measuring inherent mode signals of devices, objects, and living things. The two sensing modes may be called sensing parameter estimation and pattern recognition respectively. In this sense, wireless sensing refers to more general sensing technologies and applications using radio signals.

Integrated sensing and communication (ISAC) has the potential to integrate wireless sensing into large-scale mobile networks, which are called perceptive mobile networks (Perceptive Mobile Networks, PMNs) here. The PMN may evolve from a current 5th generation mobile communication technology (5th Generation Mobile Communication Technology, 5G) mobile network, which is expected to become a ubiquitous wireless sensing network and provide stable and high-quality mobile communication services. The PMN may be built on the existing mobile network infrastructure without major changes to network structures and devices. The maximum capacity of the mobile network will be released, and high infrastructure costs are avoided to build new wide-area wireless sensing networks separately. With the expansion of coverage, integrated communication and sensing capabilities are expected to realize many new applications. The perceptive mobile network can provide both communication and wireless sensing services, and because of large broadband coverage and strong infrastructure, it may become a ubiquitous wireless sensing solution. The joint and coordinated communication and sensing capabilities will improve the productivity of our society and help to give birth to a large number of new applications that cannot be effectively realized by existing sensing networks. Some early work of passive sensing using moving signals has proved the potential of, for example, traffic monitoring, weather forecasting, and rainfall remote sensing based on radio signals of a global system for mobile communications (Global System for Mobile Communications, GSM). The perceptive mobile network may be widely used in communication and sensing in transportation, communication, energy, precision agriculture, and security fields, but the existing solutions are either infeasible or inefficient. The perceptive mobile network may also provide complementary sensing capabilities for existing sensor networks, has unique day and night operation functions, and can penetrate through fog, leaves, and even solid objects. Some common sensing services are shown in Table 1 below:

**Table 1**

| Sensing physical range | Sensing real-time requirements | Sensing functions | Uses |
|---|---|---|---|
| Large | Medium | Weather, air quality, etc. | Meteorological, agricultural, and living services |
| Large | Medium | Traffic flow (road) and people flow (subway station) | Smart city, intelligent transportation, and business services |
| Large | Medium | Animal activities, migration, etc. | Animal husbandry, ecological environment protection, etc. |
| Large | High | Target tracking, ranging, velocity measurement, and angle measurement | Many application scenarios of traditional radar, V2X, etc. |
| Large | Low | Three-dimensional mapping | Navigation and smart city |
| Small | High | Action posture recognition | Smart interaction, games and smart home of smartphones |
| Small | High | Heartbeat/breathing, etc. | Health monitoring and medical treatment |
| Small | Medium | Imaging | Security check and logistics |
| Small | Low | Material texture | Construction, manufacturing, exploration, etc. |

However, in an ISAC system in the related art, a large number of wireless sensing signal transmitters and wireless sensing signal receivers need to be laid out, so that the wireless sensing signal receivers may determine sensing measurement quantities and sensing results according to received sensing signals transmitted by the wireless sensing signal transmitters. However, the wireless sensing signal transmitters and the wireless sensing signal receivers include power-consuming radio frequency links, including oscillators, mixers, and digital-to-analog converters, which lead to a large size of sensing devices and a short battery life, thereby limiting the layout of the sensing devices in the ISAC and then lowering the sensing performance of the ISAC system.

In the wireless sensing method provided by this embodiment of this application, signals transmitted by the wireless sensing signal transmitter may be at least partially backscattered by a first device with low energy consumption and small size, so as to provide new sensing paths and even new sensing auxiliary information, thereby improving the sensing performance of the ISAC system.

Second, in the related art, a backscatter communications (Backscatter Communications, BSC) technology with low power consumption and low complexity is a technology that simply relies on passive reflection and modulation of incident radio frequency (Radio Frequency, RF) waves. In recent years, driven by the progress of consumer electronics, a 5G communication technology, and a big data analysis technology supported by cloud computing, the rapid growth of the Internet of Things has attracted great attention from the industry and academia. One of the main open challenges facing the Internet of Things is that the network life cycle is limited because a large number of Internet of Things devices are powered by batteries with limited capacity. The BSC technology has become a promising technology in dealing with this challenge.

Specifically, traditional radio architectures have power-consuming radio frequency links, including oscillators, mixers, and digital-to-analog converters, which lead to large device sizes and greatly limit the battery life of the Internet of Things devices. In contrast, for a backscatter node, there is no active radio frequency component. Therefore, hardware has extremely low power consumption (for example, 10 µW), which is convenient for large-scale deployment in various flexible occasions and even implantation in vivo.

In the past 20 years, a point-to-point BSC technology has been widely used in radio frequency identification (Radio Frequency Identification, RFID) applications. Passive RFID tags may report ID to near-field readers (usually several centimeters to one meter). In the early stage, the Internet of Things is mainly composed of RFID devices for logistics and inventory management. However, the future 6G Internet of Things is expected to connect tens of billions of devices, complete more complex and multi-functional tasks, and have a global impact. It is required that the communication capability and range (tens of meters) between Internet of Things nodes far exceed the original RFID. That is, burst and low-rate transmissions within a few meters (only ID sequences of several bytes written in advance are transmitted) are only supported. The traditional RFID communication distance is in the order of m, while the next generation BSC communication distance is generally expected to reach the order of km. The traditional RFID adopts binary modulation, and the communication rate is generally not more than 640 Kbps. The next generation BSC may adopt high-order modulation, and the communication rate can reach at least 10 Mbps or even 2 Gbps. Based on the existing BSC theory, the foregoing goals are achieved by using advanced communication technologies such as small cellular network, full duplex, multi-antenna communication, large-scale access and wireless power transmission, as well as micro-radio (such as button-sized radio) and low-power electronic device manufacturing. To sum up, the continuous development of the Internet of Things provides many promising application scenarios for the BSC technology, which makes BSC a hot research direction in recent years.

The integrated sensing and communication can give birth to a series of new 6G applications. Besides several typical sensing use cases listed in Table 1, the integrated sensing and communication based on low-power communication devices will also become an important application scenario of 6G. In this embodiment of this application, wireless sensing based on RFID and BSC technologies, compared with device-free (Device-free) wireless sensing in the related art, can realize a basic sensing function and also obtain additional sensing target information, so as to further enhance the sensing performance or the integrated sensing and communication performance. Since RFID and backscatter have the advantages of low cost, low power consumption, and large-scale deployment, sensing and integrated sensing and communication based on RFID/backscatter are expected to be widely used in 6G. For example, a roadside unit (Roadside Unit, RSU) having a sensing function in the Internet of Vehicles may communicate with vehicles on the road through self-transmitted and self-received integrated sensing and communication signals, and complete vehicle positioning, velocity measurement, and trajectory tracking at the same time. When a RFID or backscatter tag (tag) is installed on the vehicle, the tag can provide additional auxiliary information such as a vehicle ID and a current vehicle state. By receiving a reflected signal of the tag, the RSU can realize high-precision vehicle positioning, velocity measurement, and trajectory tracking, and can also accurately identify and distinguish different vehicles on the road, thus expanding the sensing capability. However, key technologies in RFID-based wireless sensing, such as tag-based integrated sensing and communication waveform design, frame structure design, sensing scheme, and algorithm design, are all problems that need to be researched and solved.

Embodiments of this application provide a wireless sensing scheme based on a backscatter function of a first device to enable the first device to be applied to wireless sensing.

A wireless sensing method and apparatus, a network-side device, and a terminal provided by embodiments of this application are described below in detail through some embodiments and application scenarios thereof with reference to the drawings.

Referring to FIG. 2, an execution entity of the first wireless sensing method provided by this embodiment of this application may be a first device. The first device has a backscatter function. For example, the first device may include a device having a backscatter function (or called a backscattering function), such as a RFID tag and a backscatter tag (Backscatter tag), which is not exhaustive herein, and for convenience of explanation, the first device is exemplified as a tag (which may be a single tag or a tag array) in the following embodiments. Definitely, in addition to the tag, the first device may also include other devices having a backscatter function, and may even include other sensing devices, etc., which are not specifically limited herein.

As shown in FIG. 2, the first wireless sensing method may include the following steps:
Step 201: A first device backscatters a sensing signal to a wireless sensing signal receiver, where the sensing signal is from a wireless sensing signal transmitter.

In an implementation, the first device may have an antenna, and a signal collection range of the antenna is greater than or equal to a distance between the first device and the wireless sensing signal transmitter, so that the sensing signal transmitted by the wireless sensing signal transmitter can be collected by using the antenna of the first device (namely, the first device is located within a coverage range of the wireless sensing signal transmitter), and the wireless sensing signal collected by the antenna can be backscattered by adjusting the matching impedance of the antenna and other processes.

In a specific implementation, the first device has a backscatter function. That is, the first device is a device with low power consumption and low complexity, and supports backscatter communications. The device supporting backscatter communications may transmit information by modulating and backscattering (referred to as "reflection" in the following embodiments) wireless signals received from the environment without requiring conventional communication modules such as power-consuming transceivers and amplifiers, and may realize extremely low power consumption and low-cost communication. Optionally, the device supporting backscatter communications may collect energy of surrounding wireless signals or other energy for the communications, thereby realizing extremely low power consumption or even zero power consumption communication.

In addition, the wireless sensing signal transmitter may be a network-side device (for example, a base station or a transmit receive point (Transmit Receive Point, TRP) or a terminal, and the wireless sensing signal receiver may also be a network-side device (for example, a base station or a TRP) or a terminal. Specifically, the wireless sensing signal transmitter may be a first network-side device or a first terminal, and the wireless sensing signal receiver may be a second network-side device, a second terminal, a first network-side device, or a first terminal.

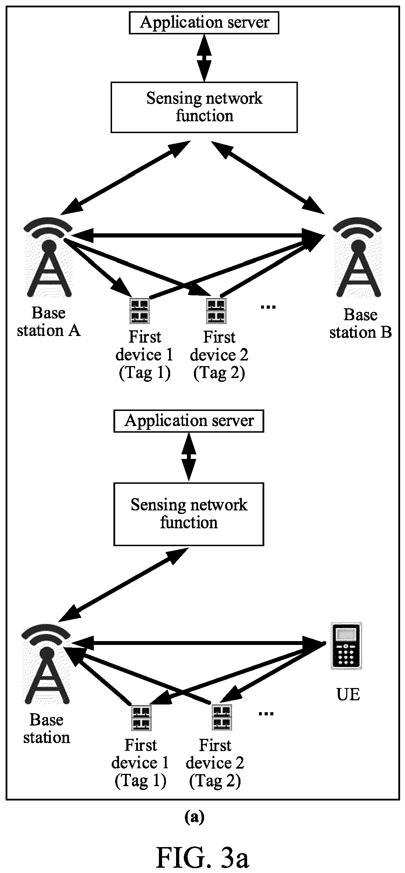

For example, as shown in FIG. 3a, the wireless sensing signal receiver may be a base station, and the wireless sensing signal transmitter may be a base station or a terminal. That is, base station A transmits sensing signals, which are partially or fully reflected by a tag, and base station B receives the sensing signals. Or a user equipment (User Equipment, UE) transmits sensing signals, which are partially or fully reflected by a tag, and the base station receives the sensing signals.

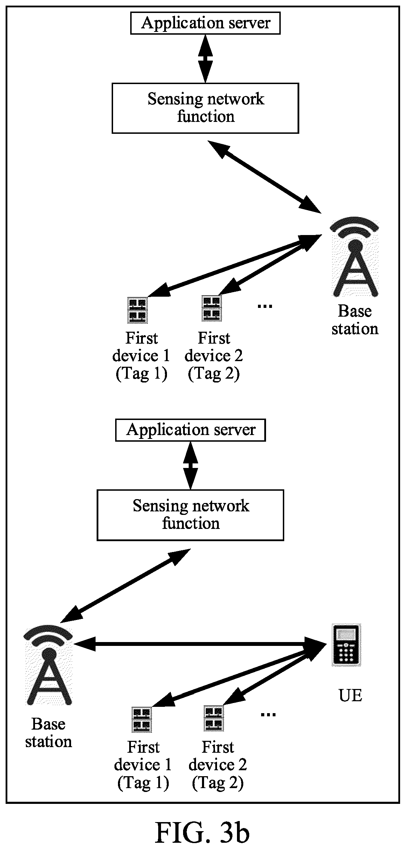

For another example, as shown in FIG. 3b, the wireless sensing signal receiver and the wireless sensing signal transmitter may be the same device (a base station or a terminal). That is, the base station transmits sensing signals, which are partially or fully reflected by a tag, and therefore, the base station receives the sensing signals. Or, a UE transmits sensing signals, which are partially or fully reflected by a tag, and the UE receives the sensing signals.

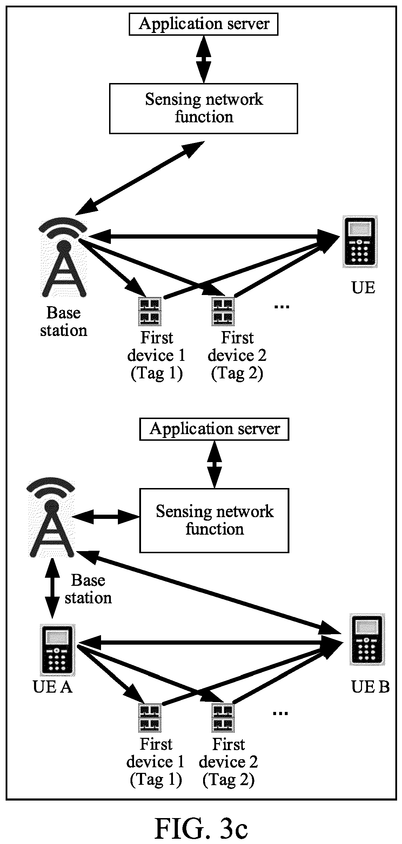

For another example, as shown in FIG. 3c, the wireless sensing signal receiver may be a UE, and the wireless sensing signal transmitter may be a base station or a terminal. That is, UE A transmits sensing signals, which are partially or fully reflected by a tag, and UE B receives the sensing signals. Or, the base station transmits sensing signals, which are partially or fully reflected by a tag, and the UE receives the sensing signals.

For convenience of explanation, the following embodiments illustrate the wireless sensing method provided by this embodiment of this application by taking the wireless sensing system as shown in FIG. 3c as an example.

Optionally, before the first device backscatters the sensing signal to the wireless sensing signal receiver, the method further includes:
The first device receives first indication information from the wireless sensing signal transmitter, where the first indication information is used for indicating first information to be fed back to the wireless sensing signal receiver by the first device.

The operation that a first device backscatters a sensing signal to a wireless sensing signal receiver includes:
The first device modulates the first information onto the sensing signal, so that the wireless sensing signal receiver receives the modulated sensing signal.

In a specific implementation, the first indication information is used for instructing the first device to modulate specified first information in a sensing signal. The sensing signal may be understood as: a sensing signal for sensing measurement.

In an optional implementation, the first indication information and the sensing signal may be signals transmitted at different times by the wireless sensing signal transmitter. For example, the first device first acquires the first indication information and determines the first information according to the first indication information. After a time gap (time gap), the first device modulates the previously determined first information onto the sensing signal and backscatters the sensing signal, and the wireless sensing signal receiver receives the modulated sensing signal. The first device modulates the first information onto the sensing signal, which may be understood as: The first device influences the amplitude, phase or frequency of the sensing signal in an environment of the first device by adjusting the matching impedance and other processes, so as to modulate the sensing signal and make the sensing signal carry the first information.

In another optional implementation, the first indication information and the sensing signal may be located in different information domains of the same signal. For example, a head area of a signal may carry the first indication information, and other areas of the signal may be regarded as sensing signals for sensing measurement.

In this implementation, the first device may demodulate the received signal to acquire first indication information therefrom, and prepare first information to be modulated into the backscattered sensing signal according to an indication of the first indication information. At this moment, the first device may provide additional first information, such as location information of the first device and information of a target sensing object attached to the first device. In this way, the first information may be used to provide assistance for a wireless sensing process, and even the first information of the first device may be directly taken as a sensing result, thereby improving the sensing performance of the wireless sensing process.

Definitely, in an implementation, the first device may directly backscatter the sensing signal without acquiring the first indication information. At this moment, the sensing signal backscattered by the first device may not carry the first information added by the first device.

For example, the sensing signal transmitted by the wireless sensing signal transmitter is a preset sensing signal sequence in which signal configuration information such as a waveform, a bit sequence, and a frequency range is known or pre-determined. The preset sensing signal sequence is backscattered by the first device to the wireless sensing signal receiver, and the wireless sensing signal receiver may perform a target signal process based on the target sensing signal sequence and the preset sensing signal sequence to obtain a target measurement quantity. The target signal process includes, but is not limited to, matched filtering, cross-correlation, sliding correlation, and other operations. The result of the target signal process is to obtain the target measurement quantity.

It should be noted that in practical application, the sensing signals transmitted by the wireless sensing signal transmitter may also be sensing signals transmitted in at least two intervals, which are not specifically limited herein.

In addition, when the sensing signal receiver receives the sensing signal at least partially backscattered by the first device, at least one of measurement, demodulation and the like may be performed on the sensing signal to obtain the target measurement quantity. A target sensing result demanded by the target sensing demand information is determined based on the target measurement quantity. Definitely, a node that determines the target sensing result based on the target measurement quantity may be a base station, a UE, a core network, or an application server, which is not specifically limited herein. For example, the sensing signal receiver may calculate the target sensing result according to the acquired target measurement quantity, and then transmit the target sensing result directly or indirectly to an initiator of a sensing service. Alternatively, the sensing signal receiver may transmit the target measurement quantity to at least one of other base stations, UEs, core networks, or application servers, so as to calculate the target sensing result through at least one of other base stations, UEs, core networks, or application servers and transmit the target sensing result to the initiator of the sensing service.

It is worth noting that compared with a sensing mode in which only a base station and a user mobile terminal participate (namely, the base station self-transmits and self-receives a sensing signal, base station A transmits a sensing signal while base station B receives the sensing signal, the base station and the terminal transmit and receive a sensing signal, the terminal self-transmits and self-receives a sensing signal, and terminal A transmits a sensing signal while terminal B receives the sensing signal), the addition of a tag has the following advantages:
(1) The tag has the characteristics of low power consumption, low cost, and small size, and is very suitable for large-scale deployment in the environment. Therefore, compared with the above-mentioned sensing modes, the tag can greatly increase the sensing range (increasing a sensing physical distance, a physical angle range, and a sensing network density) and improve the sensing performance (improving a sensing resolution, reducing a sensing error, improving a sensing signal-to-noise ratio, and the like).
(2) The tag may be deployed in the environment or on a sensing target. No matter where the tag is deployed, the tag can provide additional sensing information (environment information and sensing target object information) for a sensing party, assist device-free (device-free) sensing to improve the sensing performance, and also have lower power consumption and less signaling overhead compared with device-based (device-based) sensing.
(3) The tag is artificially designed, and the backscatter characteristics of the tag are more stable than the reflection characteristics of device-free sensing objects. The tag is relatively less susceptible to the interference of a sensing distance and a sensing (observation) direction, and is easier to be detected by the sensing party, thereby improving the sensing robustness.
(4) The tag is flexibly deployed. By skillfully deploying several tags or tag arrays on some paths where sensing signals are difficult to propagate, it is expected to play a certain role in sensing blindness filling.
(5) Information stored on the tag (such as a tag ID, tag location coordinates, a tag number, a tag communication capability, and physical information of a target to which the tag belongs) may be stored as prior information in a sensing network function unit (Sensing Network Function Unit, SNF) or a similar network function unit of a core network at the beginning of deployment, or the prior information stored in the tag may be read by the base station or terminal accessed by the tag. Therefore, richer and more flexible sensing schemes can be provided for the network, and more sensing functions can be realized.
(6) The cost of the tag is much lower than the costs of the base station and the terminal, and a new generation of backscatter tag in the future has a strong communication function. Therefore, tag-based sensing naturally becomes an economical, efficient, and low-complexity implementation mode of integrated sensing and communication.

It should be noted that in application, the sensing signal may be a sensing signal in a specific sensing service, for example, weather monitoring, three-dimensional remapping, traffic/crowd sensing, air quality detection such as PM 2.5 monitoring, factory pollutant detection, farm livestock monitoring, or human action/posture recognition, and other sensing services.

The initiator of the sensing service may be a third-party application, a core network (or a network management system, or a base station), or a UE.

### Specific Implementation 1

For the wireless sensing system as shown in FIG. 3c, if a sensing service is initiated by a third-party application, the sensing method provided by this embodiment of this application may include the following steps:
Step 1): An application server receives a sensing demand of the third-party application. For example, the sensing demand is a three-dimensional map sensing a target area (the accuracy/resolution of the map is 5 m). The target area may be a designated area, such as the periphery of a certain building, or a periphery area of a target UE. The sensing demand may include information of the target area, such as latitude and longitude (range) and other information of the area.
Step 2): The application server (including: an in-network server, such as an IP multimedia subsystem (IP Multimedia Subsystem, IMS), or including an off-network server) transmits the sensing demand to a core network (for example, an AMF) or a sensing network function/sensing network element of the core network, such as, an SNF. Alternatively, the application server transmits the sensing demand to the AMF, and the AMF forwards the sensing demand to the sensing network function/sensing network element.
Step 3): A network function or network element of the core network (such as the sensing network function/sensing network element) determines an associated transmitting UE (namely, UE A) and receiving UE (namely, UE B) according to the sensing demand, and transmits the sensing demand and/or sensing signal related configurations corresponding to the sensing demand to the associated transmitting UE A and/or UE B. It should be noted that when a base station transmits a sensing signal, or the base station schedules UE A to transmit the sensing signal, or the base station participates in determining the configuration of UE A to transmit the sensing signal, or the base station converts a target measurement quantity into a sensing result, the network function or network element of the core network (such as the sensing network function/sensing network element) determines an associated base station according to the sensing demand, and transmits the sensing demand and/or sensing signal related configurations corresponding to the sensing demand to the associated base station.
Step 4): The core network (or the sensing network element) or UE A or the base station transmits sensing signal related configuration information (including time-frequency information and sequence information) or the sensing demand to UE B.
Step 5): The core network (or the sensing network element) or UE A or the base station transmits the type of a measurement quantity related to the sensing signal to be measured by UE B (for example, AOA, AOD, delay, received power of the sensing signal, radar spectrum information, and the like) to UE B (receiving terminal). It should be noted that when the type of the measurement quantity is determined by UE B according to the sensing demand, the core network (or the sensing network element) or UE A or the base station needs separate signaling to indicate the type of the measurement quantity (for example, UE B determines the type of the measurement quantity according to a mapping table of the sensing demand to the type of the measurement quantity).
Step 6): UE A or the base station transmits the sensing signal, where UE A or the base station may transmit the sensing signal in a beam sweeping (beam sweeping) manner.
Step 7): UE B receives the sensing signal at least partially reflected by the tag to obtain a target measurement quantity.
Step 8): Determine a target sensing result according to the target measurement quantity.

In an implementation, the target sensing result may be determined according to the target measurement quantity by at least one of the core network, the application server, the base station, or the UE.

Manner 1: If the conversion of the target measurement quantity to the target sensing result is performed in the core network or the application server, step 8) may include the following specific processes:
Step 81a): UE B transmits the target measurement quantity to the core network (or the sensing network element). Alternatively, UE B transmits the target measurement quantity to UE A or the base station, and UE A or the base station transmits the target measurement quantity to the core network (or the sensing network element).
Step 82a): The core network (or the sensing network element) transmits the target measurement quantity to the application server, and the application server determines the target sensing result according to the target measurement quantity. Alternatively, the core network (or the sensing network element) determines the target sensing result according to the target measurement quantity and transmits the target sensing result to the application server.
Step 83a): The application server transmits the target sensing result to the third-party application.

Manner 2: If the conversion of the target measurement quantity to the target sensing result is performed in the base station, step 8) may include the following specific processes:
Step 81b): UE B transmits the target measurement quantity to an associated base station, and the base station determines the target sensing result according to the target measurement quantity and transmits the target sensing result to the core network (or the sensing network element). Alternatively, UE B transmits the target measurement quantity to UE A, UE A transmits the target measurement quantity to the associated base station, and the base station determines the target sensing result according to the target measurement quantity and transmits the target sensing result to the core network (or the sensing network element).
Step 82b): The core network (or the sensing network element) transmits the target sensing result to the application server.
Step 83b): The application server transmits the target sensing result to the third-party application.

Manner 3: If the conversion of the target measurement quantity to the target sensing result is performed in the UE, step 8) may include the following specific processes:
Step 81c): UE B determines the target sensing result according to the target measurement quantity and transmits the target sensing result to the core network (or the sensing network element). Or, UE B determines the target sensing result based on the target measurement quantity and transmits the target sensing result to UE A, and UE A transmits the target sensing result to the core network (or the sensing network element). Or, UE B transmits the target measurement quantity to UE A, and UE A determines the target sensing result based on the target measurement quantity and transmits the target sensing result to the core network (or the sensing network element).
Step 82c): The core network (or the sensing network element) transmits the target sensing result to the application server.
Step 83c): The application server transmits the target sensing result to the third-party application.

### Specific Implementation 2

When a sensing service is initiated by a core network (or a network management system or a base station), the sensing method provided by this embodiment of this application differs from Specific Implementation 1 in that:

A network function or network element of the core network (such as a sensing network function/sensing network element) acquires a sensing demand and/or sensing signal related configurations from the core network AMF, or the AMF receives the sensing demand and/or sensing signal related configuration information transmitted by the network management system and forwards the sensing demand or the sensing signal related configuration information to the sensing network element, or the AMF receives the sensing demand or the sensing signal related configuration information transmitted by the base station initiating the sensing service and forwards the sensing demand or the sensing signal related configuration information to the sensing network element (definitely, the sensing demand or the sensing signal related configuration information of the wireless sensing signal transmitter (the base station or UE A) may be directly transmitted to the wireless sensing signal receiver (UE B) instead of the core network).

After the wireless sensing signal receiver obtains a target measurement quantity, a node that completes the target measurement quantity to a target sensing result may transmit the target sensing result directly or indirectly to an initiator of the sensing device.

For example, if the conversion from the target measurement quantity to the target sensing result is completed at the core network, the initiator of the sensing service may acquire the target sensing result in the following manners:

UE B transmits the target measurement quantity to the core network (AMF or sensing network element). Alternatively, UE B transmits the target measurement quantity to the base station, and the base station transmits the target measurement quantity to the core network (AMF or sensing network element).

The core network (AMF or sensing network element) converts the target measurement quantity into the target sensing result.

If the sensing demand of the core network comes from the network management system, the core network transmits the target sensing result to the network management system. Alternatively, the core network transmits the target measurement quantity to the network management system, and the network management system converts the target measurement quantity into the target sensing result.

If the target sensing demand of the core network comes from the base station, the core network transmits the target sensing result to the base station.

For another example, if the conversion from the target measurement quantity to the target sensing result is completed at the base station, the initiator of the sensing service may acquire the target sensing result in the following manners:
UE B transmits the target measurement quantity to the base station. Alternatively, UE B transmits the target measurement quantity to UE A, and UE A transmits the target measurement quantity to the base station.

The base station converts the target measurement quantity into the target sensing result, and transmits the target sensing result to the core network (AMF or sensing network element).

If the sensing demand of the core network comes from the network management system, the core network transmits the target sensing result to the network management system.

If the sensing demand of the core network comes from the base station, the core network transmits the target sensing result to the base station.

For another example, if the conversion from the target measurement quantity to the target sensing result is completed at the UE, the initiator of the sensing service may acquire the target sensing result in the following manners:
UE B determines the target sensing result according to the target measurement quantity, and transmits the target sensing result to the core network (AMF or sensing network element). Alternatively, UE B transmits the target measurement quantity to UE A, and UE A determines the target sensing result according to the target measurement quantity, and transmits the target sensing result to the core network (AMF or sensing network element).

If the sensing demand comes from the network management system, the core network transmits the target sensing result to the network management system.

If the sensing demand comes from the base station, the core network transmits the target sensing result to the base station.

It should be noted that when the sensing network function/sensing network element is deployed at the base station, the core network may not participate in the whole sensing process. For example, the sensing service is initiated by the base station, and the conversion of the target measurement quantity to the target sensing result is completed at the UE or the base station.

### Specific Implementation 3

When a sensing service is initiated by a UE (UE A, UE B, or another UE), the sensing method provided by this embodiment of this application differs from Specific Implementation 1 in that:
The sensing service initiating UE transmits a sensing request (including sensing demand information) and/or sensing signal related configuration information to an AMF through a non access stratum (Non Access Stratum, NAS) signaling, and then the AMF forwards the sensing demand information and/or the sensing signal related configuration information to a sensing network element.

After the wireless sensing signal receiver obtains a target measurement quantity, a node that completes the target measurement quantity to a target sensing result may transmit the target sensing result directly or indirectly to an initiator of the sensing device.

For example, if the conversion from the target measurement quantity to the target sensing result is completed at the core network, the initiator of the sensing service may acquire the target sensing result in the following manners:

UE B transmits the target measurement quantity to the core network (AMF or sensing network element). Alternatively, UE B transmits the target measurement quantity to the base station, and the base station transmits the target measurement quantity to the core network (AMF or sensing network element).

The core network (AMF or sensing network element) converts the target measurement quantity into the target sensing result.

The core network (AMF or sensing network element) transmits the sensing result to the sensing service initiating UE (through the NAS signaling). Alternatively, the core network (AMF or sensing network element) transmits the sensing result to a base station associated with the sensing service initiating UE, and the associated base station then transmits the sensing result to the sensing service initiating UE.

For another example, if the conversion from the target measurement quantity to the target sensing result is completed at the base station, the initiator of the sensing service may acquire the target sensing result in the following manners:
UE B transmits the target measurement quantity to the base station. Alternatively, UE B transmits the target measurement quantity to UE A, and UE A transmits the target measurement quantity to the base station.

The base station converts the target measurement quantity into the target sensing result, and transmits the target sensing result to the core network (AMF or sensing network element).

The core network (AMF or sensing network element) transmits the sensing result to the sensing service initiating UE (through the NAS signaling). Alternatively, the core network (AMF or sensing network element) transmits the sensing result to a base station associated with the sensing service initiating UE, and the associated base station then transmits the sensing result to the sensing service initiating UE.

For another example, if the conversion from the target measurement quantity to the target sensing result is completed at the UE, the initiator of the sensing service may acquire the target sensing result in the following manners:
UE B determines the target sensing result according to the target measurement quantity, and transmits the target sensing result to the core network (AMF or sensing network element). Alternatively, UE B transmits the target measurement quantity to UE A, and UE A determines the target sensing result according to the target measurement quantity, and transmits the target sensing result to the core network (AMF or sensing network element).

The core network (AMF or sensing network element) transmits the sensing result to the sensing service initiating UE (through the NAS signaling). Alternatively, the core network (AMF or sensing network element) transmits the sensing result to a base station associated with the sensing service initiating UE, and the associated base station then transmits the sensing result to the sensing service initiating UE.

It should be noted that when the sensing network function/sensing network element is deployed at the base station, the core network may not participate in the whole sensing process. For example, the sensing service is initiated by the UE, and the conversion of the target measurement quantity to the target sensing result is completed at the UE or the base station.

It should be noted that in an implementation, the process of determining the target sensing result (for example, three-dimensional map) according to the target measurement quantity (for example, angle information, received power information, and the like) may be completed at UE A/B or the base station, the core network, or the application server, and related information of UE A or the base station, such as an antenna location, synchronization information (SFN start time), and AI related information (such as AI training data), may also be transmitted to the node that completes the conversion from the target measurement quantity to the target sensing result to assist in completing the conversion process. In addition, a charging function is completed at the core network or the application server.

For ease of illustration, the network function or network element of the core network (such as the sensing network function/sensing network element) is collectively referred to as a second device in the following embodiments. And the second device may be the sensing network function/sensing network element in the core network, or may be the sensing network function/sensing network element in an access network, which is not specifically limited herein.

When the second device is an SNF, the second device satisfies at least one of the following features:
1) The SNF can interact with a target UE (including UE A and UE B as shown in FIG. 3c, or including a UE as shown in FIG. 3c), or a serving base station of the target UE, or a target tag (namely, a tag participating in the sensing process), or a serving base station of the target tag, or a base station associated with a target area for target information, so as to obtain a target sensing result or a target measurement quantity (uplink measurement quantity or downlink measurement quantity). The target information includes a processing sensing request, an interactive sensing capability, interactive sensing auxiliary data, and an interactive sensing measurement quantity or sensing result.
2) The SNF can determine a sensing type to be used according to the types of possible sensing clients, required quality of service (Quality of Service, QoS), UE sensing capability, base station sensing capability, and other factors. The above-mentioned sensing modes are three sensing types corresponding to FIG. 3a to FIG. 3c respectively.
3) The SNF can store and manage (including adding, deleting, and updating) prior information or capability information of a tag associated with a target tag area (for convenience of illustration, the prior information or capability information of the tag is collectively referred to as first information in the following embodiments). The first information includes at least one of the following: a tag ID list (not limited to a RFID electronic product code (Electronic Product Code, EPC)), which may also be an ID of a new device), the number of tags in an associated area, a location information list of the tag (two-dimensional or three-dimensional, including tag and Cartesian coordinates or polar coordinates of a reference system origin), a sensing distance list of the tag, a working bandwidth list of the tag, a working frequency list of each channel of the tag (namely, a sub-carrier frequency within a bandwidth), a modulation mode list of the tag, a supported read-write frequency, a signal-to-noise ratio of the reflected signal of the tag, the number of transmitting antennas of a single tag, the number of receiving antennas of a single tag, antenna arrangement information of a single tag (antenna spacing of a single tag, antenna formation, and the like), arrangement information of a tag array (the tag array formed by a plurality of tags, one tag is used as one array element, including tag spacing, tag array formation, and the like), error statistical distribution parameters of a reflected signal phase of the tag, an energy supply mode of the tag (including passive, semi-passive, and active), electric quantity information of the active tag, an energy storage capability (namely, a maximum energy storage capacity of the tag), an amplitude modulation capability of the tag (namely, supported adjustable reflected signal amplitude information, continuous amplitude modulation or discrete amplitude modulation and corresponding continuous or discrete feature state number), a phase modulation capability of the tag (namely, supported adjustable reflected signal phase information, continuous phase modulation or discrete phase modulation and corresponding continuous or discrete feature state number), a frequency modulation capability of the tag (namely, supported adjustable reflected signal frequency information, continuous frequency modulation or discrete frequency modulation and corresponding continuous or discrete feature state number), an encryption algorithm type of the tag (for example, cyclic redundancy check (Cyclic Redundancy Check, CRC) 16, CRC 24, or the like), the type of channel encoding ( forward error correction (Forward Error Correction, FEC), a corresponding encoding rate, and the like.

It is worth noting that at least one of the tag prior information or capability information is reported by the target tag to the network-side device such as the base station or the SNF. For example, the first information is read and reported by a reader of the tag (such as the base station accessed by the tag).

Optionally, the first information includes at least one of the following: an identity of the first device, state indication information about the first device participating in sensing (which may be: a sensing participation flag bit (indicating whether or not participation in sensing is currently possible or agreed), a sensing time period of the first device (indicating the start and end time/duration of participation in sensing), a sensing service occupation flag bit (or state indication information of the same meaning, indicating whether or not sensing service is currently being performed), and the like), angle of incidence and angle of reflection ranges of the first device (the angle of incidence range refers to an angle of incidence range of the sensing signal that enables the tag to work normally, and the angle of reflection range refers to an angle of reflection range of a reflected signal of the tag), the number of first devices in an associated area, location information of the first device (two-dimensional or three-dimensional, including tag and Cartesian coordinates or polar coordinates of a reference system origin), a sensing distance of the first device, a working bandwidth of the first device, a working frequency of each channel of the first device (namely, a sub-carrier frequency within a bandwidth), a modulation mode of the first device, a read-write frequency supported by the first device, array form information of the first device (including the number of array elements of a single tag array (one tag is used as one array element), the number of antennas of a single tag, and antenna arrangement information of a single tag), a signal-to-noise ratio of reflected signals of the first device, the number of transmitting antennas of a single first device, the number of receiving antennas of a single first device, antenna arrangement information of a single first device, arrangement information of an array including at least two first devices, error statistical distribution parameters of a reflected signal phase of the first device, an energy supply mode of the first device, electric quantity information of an active first device, an energy storage capability of the first device (whether a tag is active or electric quantity information of the active tag), an amplitude modulation capability of the first device, a phase modulation capability of the first device, a frequency modulation capability of the first device, an encryption algorithm type of the first device, and the type of a channel-coded forward error correction (FEC) of the first device and a corresponding encoding rate.

4) The SNF can determine an association relationship between the base station and the tag within the sensing area according to the location information of the base station mastered by the SNF or acquired from the AMF and the stored first information of the tag associated with the target tag area. The association criterion is to ensure that the signal-to-noise ratio of the sensing signal received by the base station and reflected by the tag meets the requirements (for example, meeting QoS requirements, meet sensing conditions corresponding to sensing demand information, and the like), and the sensing distance is greater than or equal to the distance between the base station and the tag.

5) The SNF may act as a reader (reader) of a tag by scheduling an associated base station of a target tag (the associated base station of the tag may include at least one of a serving base station of the tag and a base station associated with an area where the tag is located). For example, the base station may adjust a beam, read information from a storage area of a certain tag, or read polling information from storage areas of a plurality of tags within a certain area. After reading related information, the base station may report the related information to the SNF. The prior information stored and managed by the SNF is updated, and may also be used as necessary or auxiliary information for sensing services.

6) The SNF may act as a writer (writer) of the tag by scheduling the associated base station of the target tag. For example, the base station may adjust a beam, write information from a storage area of a certain tag, or write polling information from storage areas of a plurality of tags within a certain area.

7) The SNF may select the tag by scheduling the associated base station of the target tag. A selection operation of the tag by the base station during the sensing process may be indicated. For example, the base station may adjust a beam and select tags that meet sensing conditions corresponding to a sensing demand, so that tags that meet the sensing demand and the sensing conditions enter a corresponding active state, while other tags that do not meet the sensing demand and the sensing conditions are in an inactive state.

8) The SNF may inventory the tag by scheduling the associated base station of the target tag. For example, the base station may adjust a beam and scan all the tags that meet selection conditions cyclically, and the tags will return EPC codes (EPC codes: codes for identifying tag-attached objects).

9) The SNF may supply electric energy to the target tag by scheduling the associated base station of the target tag.

10) The second device is located at the core network or the base station. If the second device is located at the base station, all the procedures of the sensing services may be completed at a RAN (for example, in a case that the base station triggers the sensing service or the UE triggers the sensing service).

11) The second device may be a separate functional/physical entity, either deployed in a common server of the core network as one of the core network functions, or deployed at the base station as one of the base station functions.

12) The second device may directly interact with an application server (for example, an application server of an operator) for a sensing request (including sensing demand information) and a sensing result. Alternatively, the second device interacts with the AMF for the sensing request and the sensing result, and the AMF may interact directly or indirectly (through a gateway mobile location center (Gateway Mobile Location Center, GMLC) and a network exposure function (NEF)) with the application server (for example, third-party application server) for the sensing request and the sensing result.

13) Manage the overall coordination and scheduling of resources required for sensing, such as sensing resources of the base station and/or the UE.

14) Calculate or verify a target sensing result and estimate a sensing accuracy.

15) Support an immediate sensing request.

16) Support a delayed sensing request.

17) Support a periodic or event-triggered sensing request.

18) Support cancellation of a periodic or triggered sensing behavior.

19) In a case that the second device is a sensing network element, a plurality of sensing network elements may correspond to one AMF, or a single sensing network element may be connected to a plurality of AMFs. In a case that a plurality of sensing network elements may correspond to one AMF, when obtaining sensing demand information, the AMF can determine at least one of the corresponding plurality of sensing network elements as a second device participating in a sensing process corresponding to the sensing demand information according to the sensing demand information.

Considerations for determining, by the AMF, the sensing network elements participating in the sensing process include at least one of the following: Considerations for selecting, by the AMF, the sensing network elements include at least one of the following: requested QoS (such as sensing accuracy, response time, and sensing QoS level), an access type (3GPP access/non-3GPP access), an access network (AN) type of a target UE (namely, 5G NR or eLTE) and serving AN node (namely, gNodeB or NG-eNodeB), RAN configuration information, a sensing network element capability, a sensing network element load, a sensing network element location, indication of single event reporting or multiple event reporting, an event reporting duration, network slice information, and the like.

20) Acquire base station information requiring interaction information through interaction with other network elements/functions within the core network based on a target area corresponding to the sensing demand information (for example, the sensing demand is a three-dimensional map sensing the target area).

It should be noted that for the whole sensing process, the core network (or sensing network element) or the application server or other nodes (such as the AMF) may complete the supervision process.

Optionally, in step 3), the manner of determining, by the network function or network element of the core network (such as the sensing network function/sensing network element), a target UE may include at least one of the following:
The target UE is determined according to capability related information reported from the UE to the core network, namely the capability information of the UE, meeting the sensing demand.

The target UE is determined according to fourth information of the UE, for example, location information of the UE (a location or area of the UE), meeting the sensing demand.

The target UE is determined according to whether the UE accesses a transmitting base station associated with the sensing demand information, namely, the UE accesses a network-side device meeting the sensing demand (the following embodiments are illustrated with the network-side device serving as the base station). That is to say, the UE is determined after the base station associated with the sensing demand information is determined.

In an implementation, UE A and UE B may report respective sensing capabilities to the core network. Alternatively, one of UE A and UE B reports the sensing capability to the other UE, while the latter reports the sensing capabilities of UE A and UE B to the core network.

Correspondingly, in step 3), the manner of determining, by the network function or network element of the core network (such as the sensing network function/sensing network element), an associated base station may include at least one of the following:
The associated base station is determined according to whether it is a base station accessed by an associated UE (the base station is determined after the UE is determined), namely the base station participating in sensing includes a base station accessed by a terminal meeting the sensing demand.

The associated base station is determined according to capability related information reported from the base station to the core network, namely the capability information of the base station participating in sensing, meeting the sensing demand.

The associated base station is determined according to fifth information of the base station, for example, a location and area of the base station, namely location information of the base station participating in sensing, meeting the sensing demand.

Correspondingly, in step 3), the manner of determining, by the network function or network element of the core network (such as the sensing network function/sensing network element), a target tag may include at least one of the following:
The target tag is determined according to whether an associated base station or UE is accessed (the tag is determined after the base station or the UE is determined), namely a tag participating in sensing accesses the terminal or network-side device meeting the sensing demand.

The target tag is determined according to capability related information reported from the tag to the core network, namely the capability information of the tag participating in sensing, meeting the sensing demand.

The target tag is determined according to first information of the tag (including: tag location/area information, tag angle of incidence and angle of reflection range information, state indication information about participation in sensing, and the like), namely prior information of the tag participating in sensing, meeting the sensing demand.

In addition, in an implementation, there may be an association relationship between a sensing demand and sensing signal related configurations corresponding to the sensing demand. In this way, a node acquiring sensing demand information may determine the sensing signal related configurations according to the association relationship between the sensing demand and the sensing signal related configurations.

Definitely, other manners may be adopted to determine the corresponding sensing signal related configuration information according to the sensing demand information (for example, determining a bandwidth size of the sensing signal according to a sensing resolution demand, and the like), and the node determining the corresponding sensing signal related configuration information according to the sensing demand information may be at least one of the base station, the core network, the UE, and the second device:
Manner 1: The base station (corresponding to a sensing signal transmission mode in which the base station transmits the sensing signal) or UE A (corresponding to a sensing signal transmission mode in which UE A transmits the sensing signal) reports a sensing capability (capability related to transmitting the sensing signal, for example, a maximum bandwidth of transmitting the sensing signal, a maximum transmission power of the sensing signal, and the like) of the base station to the core network (AMF or sensing network element). And/or, UE B reports a sensing capability (capability related to receiving the sensing signal, for example, a maximum bandwidth of the receivable sensing signal, a measurement quantity of the supported sensing signal, and the like) of UE B to the core network (AMF or sensing network element). And/or, the base station or UE reports to the core network (AMF or sensing network element) by querying a sensing capability of a tag participating in the sensing (related capability of receiving and backscattering the sensing signal, such as a working bandwidth and frequency point, and a supportable maximum read-write frequency, which are stored on the tag). Then the core network determines sensing signal related configuration information according to the sensing demand.
Manner 2: The base station (corresponding to a sensing signal transmission mode in which the base station transmits the sensing signal) or UE A (corresponding to a sensing signal transmission mode in which UE A transmits the sensing signal) determines sensing signal related configuration information according to the sensing demand.
Manner 3: The core network determines a part of sensing signal related configuration information, and the base station (corresponding to a sensing signal transmission mode in which the base station transmits the sensing signal) or UE A (corresponding to a sensing signal transmission mode in which UE A transmits the sensing signal) determines another part of sensing signal related configuration information.
Manner 4: The core network recommends sensing signal related configuration information to the base station (corresponding to a sensing signal transmission mode in which the base station transmits the sensing signal) or UE A (corresponding to a sensing signal transmission mode in which UE A transmits the sensing signal) according to the sensing demand, and the base station or UE A finally determines the sensing signal related configuration information.
Manner 5: The base station (corresponding to a sensing signal transmission mode in which the base station transmits the sensing signal) or UE A (corresponding to a sensing signal transmission mode in which UE A transmits the sensing signal) recommends sensing signal related configuration information to the core network according to the sensing demand, and the core network finally determines the sensing signal related configuration information.

Optionally, the sensing signal related configuration information includes at least one of the following:
Waveform, for example, orthogonal frequency division multiplex (Orthogonal frequency division multiplex, OFDM), SC-FDMA, an orthogonal time frequency space (Orthogonal Time Frequency Space, OTFS), a Frequency Modulated Continuous Wave (Frequency Modulated Continuous Wave, FMCW), a pulse signal, and the like.

Sub-carrier interval, for example, a subcarrier interval of 30 KHz of an OFDM system.

Guard interval: A time interval between the time when signal transmission ends and the time when the latest echo signal of the signal is received. This parameter is proportional to a maximum sensing distance. For example, the parameter may be calculated by 2dmax/c, and dmax is the maximum sensing distance (belonging to the sensing demand). For another example, for a self-transmitted and self-received sensing signal, dmax represents the maximum distance from a transceiving point of the sensing signal to a transmitting point of the signal, and c represents the velocity of light. In some cases, a cyclic prefix (CP) of an OFDM signal may play the role of the minimum guard interval.

Bandwidth: This parameter is inversely proportional to a range resolution, and may be obtained by c/2/delta_d, where delta_d represents the range resolution (belonging to the sensing demand), and c represents the velocity of light.

Burst (burst) duration: This parameter is inversely proportional to a rate resolution (belonging to the sensing demand). This parameter is the time span of the sensing signal, mainly for calculating a Doppler frequency offset. This parameter may be calculated by c/2/delta_v/fc, where delta_v represents a velocity resolution, and fc represents a carrier frequency of the receiving signal.

Time domain interval: This parameter may be calculated by c/2/fc/v_range, where v_range represents the maximum rate minus the minimum velocity (belonging to the sensing demand), and this parameter is the time interval between two adjacent sensing signals.

Transmitting signal power: For example, a value is taken every 2 dBm from -20 dBm to 23 dBm.

Signal format, which identifies the format of the receiving signal, for example, a sounding reference signal (Sounding Reference Signal, SRS), a demodulation reference signal (Demodulation Reference Signal, DMRS), a positioning reference signal (Positioning Reference Signal, PRS), and the like, or other predefined signals, related sequence formats, and other information.

Signal direction, for example, direction or beam information of the sensing signal.

Time resource, for example, an index of a slot where the sensing signal is located or a symbolic index of the slot. The time resource is divided into two types: disposable time resources, for example, a symbol transmits an omni-directional first signal; and non-disposable time resources, for example, a plurality of groups of periodic time resources or discontinuous time resources (which may include a start time and an end time). Each group of periodic time resources transmits sensing signals in the same direction, and different groups of periodic time resources have different beam directions.

Frequency resource, including a center frequency point, bandwidth, resource block (Resource Block, RB) or sub-carrier, reference frequency position (Point A), starting bandwidth location, and the like of the sensing signal.

Quasi co-location (Quasi co-location, QCL) relationship: For example, the sensing signal includes a plurality of resources. Each resource corresponds to a synchronization signal block (Synchronization Signal and PBCH block, SSB) QCL. The type of the QCL includes Type A, B, C, or D.

Identification information of the first device: A backscatter tag ID participating in wireless sensing, where the tag ID is not limited to the EPC of RFID, and may also be an ID of a new device.

Information related to sensing signal configurations of the first device, for example, a tag working bandwidth, a working frequency, the number of channels (channel), a sub-carrier frequency corresponding to each channel, and the like.

Initial phase of the sensing signal, for example, an initial phase of the signal on each channel.

Antenna information of the first device, for example, the number of transmitting antennas, the number of receiving antennas, an array layout of transmitting and receiving antennas (including antenna formation and antenna spacing), and the like.

Antenna information of the wireless sensing signal transmitter, including: the number of antennas for transmitting sensing signals by the base station, a specific antenna index (index), and antenna location coordinates (two-dimensional coordinates, three-dimensional coordinates, Cartesian coordinates, or polar coordinates, where the coordinate system should belong to the same coordinate system as the tag participating in sensing).

Timestamp information of each antenna transmitting the sensing signal: An absolute or relative time of each transmitted signal.

Time interval of transmitting signals between different antennas: For example, if a plurality of antennas of the base station transmit the sensing signal by using time division multiplexing (Time Division Multiplexing, TDM) or TDM + frequency division multiplex (Frequency Division Multiplex, FDM), it is necessary to configure the time interval for transmitting signals between different antennas.

Amplitude modulation capability of the first device: Supported amplitude information of an adjustable reflected signal, continuous amplitude modulation or discrete amplitude modulation, and the corresponding number of states of continuous or discrete features.

Phase modulation capability of the first device: Supported phase information of an adjustable reflected signal, continuous phase modulation or discrete phase modulation, and the corresponding number of states of continuous or discrete features.

Frequency modulation capability of the first device: Supported frequency information of an adjustable reflected signal, continuous frequency modulation or discrete frequency modulation, and the corresponding number of states of continuous or discrete features.

Encryption algorithm type of the first device, for example, CRC16, CRC24, and the like.

Type of channel encoding of the first device such as forward error correction (Forward Error Correction, FEC), and a corresponding encoding rate.

Signal modulation mode related to the first device, including: double sideband amplitude shift keying (DSB-ASK), single sideband amplitude shift keying (SSB-ASK), phase-reversal (Phase-reversal ASK, PR-ASK), frequency shift keying (Frequency Shift Keying, FSK), binary phase shift keying (Binary Phase Shift Keying, BPSK), quadrature phase shift keying (Quadrature Phase Shift Keying, QPSK), quadrature amplitude modulation (quadrature amplitude modulation, QAM), and the like.

Data encoding mode and frame format related to the first device: For example, the encoding mode to be determined may be binary encoding, Manchester (Manchester) code, FM0 code, delay modulation code (Miller code), non-return-to-zero (Non-return-to-zero, NRZ) code, bipolar non-return-to-zero (BNRZ) code, non-return-to-zero inverse (NRZ-I) code, pulse width code, and other current and possible future backscatter communications digital encoding. And the frame format to be determined includes a preamble (preamble) or frame synchronization (frame-sync), and the like.

Optionally, the target measurement quantity includes:
a first measurement quantity, where the first measurement quantity is a measurement quantity related to the first device and includes at least one of the following:
a received signal strength indicator (Received Signal Strength Indicator, RSSI) and/or received power of a reflected signal backscattered by the first device, a phase of the reflected signal, timestamp information of the reflected signal (time information inserted when signals are transmitted by tags or individual tags in a tag array), a backscattered path channel matrix H of the first device, backscattered path channel state information (CSI) of the first device, multipath number parameters (including multipath number, power of each path, delay, angle information, and the like) in a backscattered path multipath channel of the first device, a Doppler frequency and Doppler spread of the reflected signal, an angle of departure of the reflected signal (namely, an angle of departure of the transmitted signal of the tag/tag array), an angle of arrival of the reflected signal (namely, an angle at which the base station receives the reflected signal of the tag/tag array), a phase difference between the first devices (for example, a phase difference between different tags within the tag array), a delay difference between the first devices (for example, a delay difference between different tags within the tag array), a phase difference between antennas of the first device (a phase difference between different antennas of the same tag), a delay difference between the antennas of the first device (a delay difference between different antennas of the same tag), and unique identification information of the first device (the unique identification information is used for distinguishing each first device or each first device in a sensing area, for example, a tag ID or a unique waveform sequence reflected by the tag).

It should be noted that in an implementation, the target measurement quantity may further include a second measurement quantity. The second measurement quantity may include at least one of the following:
feature information of a target object;
related information of a target event; and
related information of a target environment.

The feature information of the target object is information that can reflect the attribute or state of the target object, and may be at least one of the following: a location of the target object, a velocity of the target object, an acceleration of the target object, a material of the target object, a shape of the target object, a category of the target object, a radar cross section (Radar Cross Section, RCS) of the target object, and the like. The related information of the target event is information related to the target event, namely, information that can be detected/sensed when the target event occurs, and may be at least one of the following: fall detection, intrusion detection, motion recognition, breathing monitoring, heart rate monitoring, and the like. The related information of the target environment may be at least one of the following: humidity, brightness, temperature and humidity, atmospheric pressure, air quality, weather conditions, topography, building/vegetation distribution, population statistics, crowd density, vehicle density, and the like.

In application, the first device may also have an information collection function. For example, the first device further includes a sensor. Then the first device may also be configured to collect the above second measurement quantity.

Optionally, the first device also has an information collection function, and the method further includes:

The first device collects a second measurement quantity corresponding to a sensing target, where the first information includes the second measurement quantity.

The sensing target may be a sensing target in the wireless sensing method provided by this embodiment of this application. For example, when the sensing demand information is a location of a sensing target object, the sensing target is the target object, and the second measurement quantity corresponding to the sensing target may be orientation information, location information, and the like of the target object collected by the first device through a location sensor and the like.

In some embodiments, the target measurement quantity is a measurement quantity for each antenna or a measurement quantity for each sensing resource. For example, the target measurement quantity is a measurement quantity of each antenna (port) of the sensing signal transmitter or the sensing signal receiver, or the target measurement quantity is a measurement quantity on each sensing resource, such as a measurement quantity of each resource block (Resource Block, RB), a sub-carrier, or an RB group.

In an implementation, the second measurement quantity collected by the first device may be modulated into the backscattered sensing signal for transmission to the sensing signal receiver.

Optionally, the sensing signal transmitted by the wireless sensing signal transmitter may be an unmodulated Continuous Wave (Continuous Wave, CW) signal. The operation that the first device modulates the first information onto the sensing signal includes:
The first device modulates the first information onto the CW signal.

In an implementation, the first indication information may indicate certain first information to be modulated by the first device in the backscattered CW signal. For example, the first information includes a second measurement quantity collected by the first device or may also include other related information pre-stored in the tag.

In this implementation, the first device may modulate the first information in the backscattered sensing signal to provide other information except the sensing measurement quantity for the sensing process, thereby being beneficial to improving the sensing performance of the sensing system.

It should be noted that in practical application, the sensing signal received by the first device may also be another signal type, and the manner in which the first device backscatters the sensing signal and the manner in which the first information is carried in the backscattered sensing signal may be adaptively adjusted, which is not specifically limited herein.

Definitely, in a case that the related information stored in the tag is main/auxiliary sensing information and needs to be transferred to a function or entity that realizes the conversion from the target measurement quantity to the target sensing result during the sensing process, except that the first device modulates the pre-stored related information into the CW signal to be directly or indirectly transmitted to a node that determines the target sensing result according to the target measurement quantity (for example, the core network (or sensing network element), the application server, the base station, or the UE), the core network or the SNF may also schedule the base station or the UE to read the related information pre-stored in the first device.

For example, the process of acquiring, by UE B, the pre-stored related information is:
After determining a tag-based sensing mode according to the sensing demand, the core network or the SNF also needs to judge whether to perform selection, inventory, access (read and write information), and other operations for the tag participating in sensing.

The core network or the SNF issues an operating command (selection, inventory, access, and the like) for the tag to the base station (when adopting a sensing signal transmission mode in which the base station transmits the sensing signal) or UE A (when adopting a sensing signal transmission mode in which UE A transmits the sensing signal). Optionally, the operating command for the tag may be included in the sensing demand information.

The base station or UE A performs sensing signal related configurations according to the sensing demand information carrying the operating command for the tag, and transmits the sensing signal according to the sensing signal related configurations.

After receiving the sensing signal, the tag demodulates the operating command for the tag and prepares first information to be backscattered.

The sensing signal transmitted by the base station includes an unmodulated continuous wave (CW) signal, and the tag modulates the first information to be backscattered onto the CW for reflection to UE B. Alternatively, the sensing signal transmitted by UE A includes an unmodulated continuous wave (CW) signal, and the tag modulates the first information to be backscattered onto the CW for reflection to UE B.

In an implementation, after receiving a sensing signal reflected by the tag (namely, a modulated continuous wave (CW) signal), UE B may demodulate the sensing signal to acquire the first information.

Further, UE B may forward the acquired first information, the measured target measurement quantity, and other information to the core network, the base station, or other UEs according to different functions or entities for realizing the conversion from the target measurement quantity to the target sensing result. Alternatively, UE B may determine the target sensing result according to the first information, the measured target measurement quantity, and other information, and forward the target sensing result to the initiator of the sensing service corresponding to the target sensing demand information through at least one of the core network, the base station, and other UEs. The process is the same as the transmission mode of the target measurement quantity in the embodiments where the target sensing result is determined by at least one of the core network, the base station, and the UE according to the target measurement quantity, and will not be described in detail herein.

Optionally, the target measurement quantity may include:
demodulated information backscattered by the first device (such as first information); and/or,
a wireless sensing measurement quantity depending on the participation of the first device, or a wireless sensing measurement quantity not depending on the participation of the first device.

The target measurement quantity includes demodulated information backscattered by the tag (namely, first information modulated by the tag onto the sensing signal, for example, a tag ID, location coordinate information of the tag, and the like). The target measurement quantity may also be demodulated first information of the tag and at least one of a tag-based wireless sensing measurement quantity (tag-based measurement quantity) and a tag-free wireless sensing measurement quantity (tag-free measurement quantity):

The tag-based measurement quantity is a measurement quantity obtained after the tag processes the signal, for example, RSSI/received power and phase of a plurality of reflected signals of the sensing signal by a tag array. The reflected signals are modulated by the tag, and may be distinguished by different tag IDs.

The tag-free measurement quantity is a measurement quantity that can be obtained without tag assistance. For example, an antenna array of a base station acquires an azimuth angle of the tag relative to the base station based on the phase of a reflected signal from a sensing target tag without any processing of an incident sensing signal, where the phase of the reflected signal of the tag is the tag-free measurement quantity.

Similar to the target measurement quantity, the target sensing result may include a sensing result based on the demodulated information backscattered by the tag (namely, the first information carried in the backscattered sensing signal). Alternatively, the demodulated information backscattered by the tag may be directly taken as the sensing result. Furthermore, the target sensing result may also include a sensing result obtained based on at least one of the tag-based and tag-free measurement quantities. Alternatively, the target sensing result may also be a comprehensive sensing result obtained from the above-mentioned three sensing results.

In application, some prior information of the tag (referred to as the first information in the following embodiments) may be stored in the core network (or the sensing network element), or the base station, or the tag participating in sensing, and needs to be invoked or transferred during the sensing process. The first information may include at least one of the following: a tag ID list, state indication information about participation in sensing (which may be: a sensing participation flag bit (indicating whether or not participation in sensing is currently possible or agreed), a sensing time period (indicating the start and end time/duration of participation in sensing), a sensing service occupation flag bit (or state indication information of the same meaning, indicating whether or not sensing service is currently being performed), and the like), angle of incidence and angle of reflection ranges of the tag (the angle of incidence range refers to an angle of incidence range of the sensing signal that enables the tag to work normally, and the angle of reflection range refers to an angle of reflection range of a reflected signal of a tag), the number of tags in an associated area, a location information list of the tag (two-dimensional or three-dimensional, including tag and Cartesian coordinates or polar coordinates of a reference system origin), a sensing distance of the tag, a working bandwidth of the tag, a working frequency of each channel of the tag (namely, a sub-carrier frequency within a bandwidth), a modulation mode of the tag, a supported read-write frequency, an array form list of the tag (including the number of array elements of a single tag array (one tag is used as one array element), the number of antennas of a single tag, and antenna arrangement information of a single tag), error statistical distribution parameters of a reflected signal phase of the tag, whether the tag is active, electric quantity information of the active tag, and the like.

### Embodiment 1

In a case that the conversion of the target measurement quantity to the target sensing result is completed at a core network or an application server:
If the first information is stored in a core network (or sensing network element), the core network (or sensing network element) directly invokes the first information stored therein and uses the first information in the conversion process as one of the bases for generating a sensing result.

If the first information is stored in a base station, the core network (or sensing network element) requires the base station to report the first information for use in the conversion process as one of the bases for generating a sensing result.

If the first information is stored on a tag, the core network (or sensing network element) instructs UE B to perform selection, inventory, access (read and write information), and other operations on the tag, and UE B reads the corresponding first information and transmits the first information to the core network (or sensing network element) as one of the bases for generating a sensing result. Alternatively, the core network (or sensing network element) instructs UE A or the base station to perform selection, inventory, access (read and write information), and other operations on the tag, and UE A or the base station reads the corresponding first information and transmits the first information to the core network (or sensing network element) as one of the bases for generating a sensing result.

### Embodiment 2

In a case that the conversion of the target measurement quantity to the target sensing result is completed at a base station:
If the first information is stored in a core network (or sensing network element), the core network (or sensing network element) transmits the first information necessary for sensing to the base station as one of the bases for generating a sensing result by the base station.

If the first information is stored in the base station, the base station directly invokes the first information stored therein and uses the first information in the conversion process as one of the bases for generating a sensing result.

If the first information is stored on a tag, the core network (or sensing network element) instructs UE B to perform selection, inventory, access (read and write information), and other operations on the tag, and UE B reads the corresponding first information and transmits the first information to the base station as one of the bases for generating a sensing result by the base station. Alternatively, the core network (or sensing network element) instructs UE A to perform selection, inventory, access (read and write information), and other operations on the tag, and UE A reads the corresponding first information and transmits the first information to the base station as one of the bases for generating a sensing result by the base station.

### Embodiment 3

In a case that the conversion of the target measurement quantity to the target sensing result is completed at a UE:
If the first information is stored in a core network (or sensing network element), the core network (or sensing network element) transmits the first information necessary for sensing to UE B or UE A through a non access stratum (NAS). Alternatively, the core network (or sensing network element) transmits prior information of a tag necessary for sensing to an associated base station of UE B or UE A, the associated base station then transmits the first information to UE B or UE A, and UE B or UE A uses the received first information as one of the bases for generating a sensing result.

If the first information is stored at a base station, the base station transmits the first information to UE B or UE A, and UE B or UE A uses the received first information as one of the bases for generating a sensing result.

If the first information is stored on a tag, the core network (or sensing network element) instructs UE B or UE A to perform selection, inventory, access (read and write information), and other operations on the tag, and UE B or UE A reads the corresponding first information as one of the bases for generating a sensing result. Or, the core network (or sensing network element) instructs any one of UE B or UE A to perform selection, inventory, access (read and write information), and other operations on the tag, reads the corresponding first information, and transmits the first information to the other UE as one of the bases for generating a sensing result by the other UE. Or, the core network (or sensing network element) instructs the base station to perform selection, inventory, access (read and write information), and other operations on the tag, and the base station reads the corresponding first information and transmits the first information to UE B as one of the bases for generating a sensing result by UE B.

It should be noted that when the related information of the tag is updated (for example, the tag moves (location coordinates are changed), the tag is added in the network, the tag is canceled (invalid), and the like), the communication between the core network (or sensing network element)-base station (Base Station, BS)-tag may also be realized through the above-mentioned process, current information of the tag may be acquired according to the communication result, and the prior information of the tag in the core network (or sensing network element) may be updated accordingly.

As an optional implementation, the method further includes:
The first device performs reference measurement in cooperation with the wireless sensing signal transmitter and the wireless sensing signal receiver, where the reference measurement is used for acquiring a reference measurement quantity or a reference measurement result, and the target sensing result is determined based on the target measurement quantity and the reference measurement quantity or the reference measurement result.

For some tag-based sensing services, reference measurement is needed. The determination of a final sensing result needs to be based on a direct sensing result obtained after the execution of the sensing services and a sensing result of the reference measurement. For example, for detection, positioning, imaging, and the like of an object within an area where tags are distributed, reference measurement is needed when the object is not within the area, and corresponding measurement quantities are the RSSI and phase of a reflected signal of the tag. After the object enters the tag area, one measurement is needed to complete the sensing process. For another example, the weather (such as humidity and rainfall) of the area where the tags are distributed is sensed, and reference measurement is needed within a certain period of humidity or no rainfall.

It should be noted that the process of performing reference measurement to acquire a reference measurement quantity or a reference measurement result is similar to the process of acquiring a target measurement quantity or a target measurement result, except that a sensing initiator of the reference measurement is not necessarily a third-party application, but also a core network (or sensing network element), or a base station, or a UE, and the measurement environment may be different.

In an implementation, the reference measurement quantity or the reference measurement result may be stored on the core network (or sensing network element) or the tag participating in sensing, and may also be stored on the base station, so that a node that completes the target measurement quantity to the target measurement result can acquire the reference measurement quantity or the reference measurement result. In addition, there is no strict requirement on the execution time of the reference measurement and the sensing service. For example, the reference measurement may be performed first and then the sensing service may be executed to correct an error of the target measurement quantity or the target measurement result from the reference measurement quantity or the reference measurement result. Alternatively, the sensing service may be executed first and then the reference measurement may be performed. Finally, the target sensing result may be determined by combining the target measurement quantity and the reference measurement quantity or the reference measurement result.

In this implementation, the accuracy of the sensing result can be improved by the reference measurement, so as to reduce the sensing error.

In some embodiments, the sensing signals in the above procedure may be transmitted by a plurality of base stations or UEs, and/or the sensing signal receiver may also be a plurality of UEs, and/or one or more tags may participate in sensing. At this moment, the core network needs to determine base station and UE sets transmitting sensing signals, a tag set participating in sensing, and a UE set receiving sensing signals, transmits sensing signal related configuration information of the plurality of base stations and UEs and related information of the tags participating in sensing to the corresponding plurality of base stations and UEs, and transmits measurement quantities related to the sensing signals to be measured by a receiving terminal and related information of the tags participating in sensing to the corresponding plurality of receiving UEs.

Optionally, a plurality of transmitting base stations and UEs need to exchange the sensing signal related configuration information (for example, a base station or UE acting as a coordinator transmits the sensing signal related configuration information and the related information of the tags participating in sensing to other transmitting base stations and UEs, and transmits the measurement quantities related to the sensing signals and the related information of the tags participating in sensing to other receiving UEs). The message interaction between the network function or network element of the core network (such as the sensing network function/sensing network element) and the UE in the above-mentioned procedure may be performed through the base station, and messages are transparent to the base station, such as NAS signaling.

As an optional implementation, before the first device backscatters the sensing signal to the wireless sensing signal receiver, the method further includes:
The first device acquires a second sensing request message.

The first device outputs a second sensing response message, where the second sensing response message indicates that the first device agrees to participate in a sensing process corresponding to the second sensing request message and/or to provide first information.

In some embodiments, the operation that the first device acquires a second sensing request message may be that the first device receives a second sensing request message from the base station/core network. The operation that the first device outputs a second sensing response message may be understood as: The first device generates a second sensing response message for being read by the base station or other access devices. Alternatively, the second sensing response message is modulated onto a received wireless signal for being received by the base station or other access devices. For example, the base station/core network initially selects a tag participating in sensing according to the sensing demand information, and transmits a second sensing request message to the selected tag to read state indication information about participation in sensing from the tag. If the tag is indicated to agree to participate in the sensing process, the tag may be determined as the first device participating in the sensing process. If the tag is indicated to disagree to participate in the sensing process, other tags may be re-selected.

The first device may receive the second sensing request message from the base station/core network and feed back a second sensing response message to the base station/core network to inform the base station/core network whether the first device agrees to participate in the sensing process or agrees to provide the first information.

In this implementation, the tag may agree or refuse to participate in the sensing process and/or provide related prior information stored on the tag during the process of reflecting the sensing signal.

Definitely, in an implementation, the first device may also agree or refuse to participate in sensing and/or provide related prior information stored on the tag in other manners.

For example, when the base station/core network determines the tag participating in the sensing service (corresponding to step 3)), the tag is indicated to agree/refuse to participate in sensing and/or provide related prior information stored on the tag through the state indication information about participation in sensing. Or:
When the base station/core network determines the tag participating in the sensing service (corresponding to step 3)), the base station performs selection, inventory, access (read and write information), and other operations on the tag, and the tag is indicated to agree/refuse to provide related prior information stored on the tag through the state indication information about participation in sensing. Or:
Whether the tag may participate in the related sensing service is agreed in advance and stored in a related storage node of the core network (for example, a unified data repository (Unified Data Repository, UDR)). The network function or network element of the core network (such as the sensing network function/sensing network element) receives a sensing demand and screens a tag participating in the sensing service (corresponding to step 3)), accesses a storage node storing whether the associated tag may participate in the related sensing service, and obtains information indicating whether the tag may participate in the related sensing service and/or provides related prior information stored on the tag.

Similar to the tag agreeing or refusing to participate in the sensing process, the UE may also agree or refuse to participate in the sensing process by:
After the network function or network element of the core network (such as the sensing network function/sensing network element) transmits the sensing demand to UEs, the UEs agree or refuse, and a UE participating in the sensing service is screened from the UEs agreeing to provide the sensing demand (corresponding to step 3)). Or:
After screening the UE participating in the sensing service (corresponding to step 3)), the base station/core network transmits a sensing participation request message to the associated UE, and the UE agrees or refuses. Or:
Whether the UE may participate in the related sensing service is agreed in advance and stored in a related storage node of the core network (for example, a UDR). The network function or network element of the core network (such as the sensing network function/sensing network element) receives a sensing demand and screens a UE participating in the sensing service (corresponding to step 3)), accesses a storage node storing whether the associated UE may participate in the related sensing service, and obtains information indicating whether the UE may participate in the related sensing service.

In this embodiment of this application, a first device backscatters a sensing signal to a wireless sensing signal receiver, where the sensing signal is from a wireless sensing signal transmitter. In this way, the sensing signal transmitted by the wireless sensing signal transmitter is backscattered to the wireless sensing signal receiver by using a backscatter function of the first device, and an additional sensing path may be provided for wireless sensing through the backscatter function of the first device. Furthermore, the first device having the backscatter function may not have a power-consuming radio frequency link, and thus has the characteristics of small size, small power consumption, and the like. Compared with the wireless sensing signal transmitter and receiver, the first device is more conveniently arranged in an ISAC system to improve the sensing performance of the ISAC system.

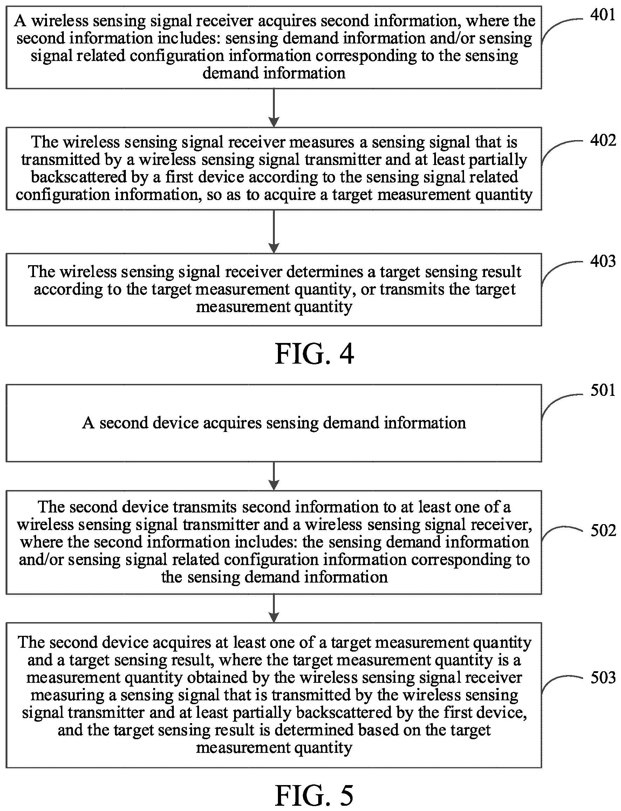

FIG. 4 is a flowchart of a second wireless sensing method according to embodiments of this application. The wireless sensing method shown in FIG. 4 is different from the wireless sensing method shown in FIG. 2 in that: The execution entity of the wireless sensing method shown in FIG. 4 is a wireless sensing signal receiver, while the execution entity of the wireless sensing method shown in FIG. 2 is a first device. As shown in FIG. 4, the wireless sensing method performed by the wireless sensing signal receiver may include the following steps:
Step 401: A wireless sensing signal receiver acquires second information, where the second information includes: sensing demand information and/or sensing signal related configuration information corresponding to the sensing demand information.
Step 402: The wireless sensing signal receiver measures a sensing signal that is transmitted by a wireless sensing signal transmitter and at least partially backscattered by a first device according to the sensing signal related configuration information, so as to acquire a target measurement quantity.
Step 403: The wireless sensing signal receiver determines a target sensing result according to the target measurement quantity, or transmits the target measurement quantity.

The procedure of acquiring the sensing demand information and/or the sensing signal related configuration information, the transmission process of the sensing signal, and the process of conversion from the target measurement quantity to the target sensing result in this embodiment of this application are the same as those in the method embodiments shown in FIG. 2, and will not be specifically limited herein.

In an optional implementation, the operation that the wireless sensing signal receiver measures a sensing signal that is transmitted by a wireless sensing signal transmitter and at least partially backscattered by a first device according to the sensing signal related configuration information, so as to acquire a target measurement quantity includes:
The wireless sensing signal receiver receives a target sensing signal sequence that is transmitted by the wireless sensing signal transmitter and at least partially backscattered by the first device.

The wireless sensing signal receiver performs a target signal process based on the target sensing signal sequence and a preset sensing signal sequence to obtain a target measurement quantity, where the sensing signal related configuration information includes signal configuration information of the preset sensing signal sequence that is transmitted by the wireless sensing signal transmitter.

In this implementation, the sensing signal transmitted by the wireless sensing signal transmitter is a preset sensing signal sequence predetermined by at least one of signal parameters such as a waveform, a bit sequence, and a frequency range. At this moment, the first device may directly backscatter the preset sensing signal sequence transmitted by the wireless sensing signal transmitter to the wireless sensing signal receiver, so that the wireless sensing signal receiver can perform at least one of target signal processes such as matching filtering, cross correlation, and sliding correlation between the received target sensing signal sequence and the preset sensing signal sequence, thereby determining the target measurement quantity according to the result of the target signal process.

Definitely, in an implementation, the sensing signal transmitted by the wireless sensing signal transmitter and at least partially backscattered by the first device may be a conventional sensing signal. At this moment, the wireless sensing signal receiver can measure the received sensing signal to obtain a target measurement quantity such as a receiving frequency, a receiving time, and a receiving power, and determine a target sensing result according to the target measurement quantity. In this implementation, the backscatter function of the first device may be used to expand a transmission path of the sensing signal to improve the sensing range and sensing accuracy of the wireless sensing system.

In another optional implementation, the wireless sensing signal transmitter may transmit first indication information and a sensing signal. The first indication information is used for instructing the first device to modulate the first information on the sensing signal. Accordingly, the wireless sensing signal receiver may demodulate the received sensing signal to acquire first information carried by the sensing signal. That is, the target measurement quantity may include the first information.

In this implementation, the first device may modulate the first information pre-stored on the sensing signal, so that the wireless sensing signal receiver uses the first information as a target measurement quantity or directly take the first information as a target sensing result, thereby improving the comprehensiveness of the sensing measurement quantity in the wireless sensing method and improving the sensing performance of the wireless sensing system.

Optionally, the target measurement quantity includes:
demodulated information backscattered by the first device; and/or,
a wireless sensing measurement quantity depending on the participation of the first device, or a wireless sensing measurement quantity not depending on the participation of the first device.

Optionally, the sensing signal related configuration information includes at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

Optionally, the target measurement quantity includes:
a first measurement quantity, where the first measurement quantity is a measurement quantity related to the first device and includes at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

Optionally, the method further includes:
The wireless sensing signal receiver receives a target operating command.

The wireless sensing signal receiver reads first information of the first device according to the target operating command, and transmits the first information to a second device, where the target sensing result is a sensing result determined by the second device according to a target measurement result and the first information.

This implementation is similar to the process in which the SNF may also schedule the base station or the UE to read the related information pre-stored in the first device in the method embodiments shown in FIG. 2, and will not be specifically limited herein.

Optionally, before the wireless sensing signal receiver measures a sensing signal that is transmitted by a wireless sensing signal transmitter and at least partially backscattered by a first device according to the sensing signal related configuration information, so as to acquire a target measurement quantity, the method further includes:
The wireless sensing signal receiver transmits a first sensing response message in response to receiving the sensing demand information or a first sensing request message, where the first sensing response message indicates that the wireless sensing signal receiver agrees to participate in a sensing process corresponding to the sensing demand information or the first sensing request message.

This implementation is similar to the method embodiments shown in FIG. 2 in which the UE or the base station agrees or refuses to participate in the sensing process, and will not be described in detail herein.

Optionally, before the wireless sensing signal receiver measures a sensing signal that is transmitted by a wireless sensing signal transmitter and at least partially backscattered by a first device according to the sensing signal related configuration information, so as to acquire a target measurement quantity, the method further includes:
The wireless sensing signal receiver performs reference measurement in cooperation with the wireless sensing signal transmitter and the first device, so as to acquire a reference measurement quantity.

The wireless sensing signal receiver determines a reference sensing result according to the reference measurement quantity, or transmits the reference measurement quantity.

This implementation is similar to the reference sensing process in the method embodiments shown in FIG. 2, and will not be described in detail herein.

The second wireless sensing method provided by this embodiment of this application corresponds to the method embodiments shown in FIG. 2, and the same beneficial effects can be achieved. To avoid repetition, details are omitted herein.

FIG. 5 is a flowchart of a third wireless sensing method according to embodiments of this application. The wireless sensing method shown in FIG. 5 is different from the wireless sensing method shown in FIG. 2 in that: The execution entity of the method embodiments shown in FIG. 5 is a second device, while the execution entity of the method embodiments shown in FIG. 2 is a first device. As shown in FIG. 5, the wireless sensing method performed by the second device may include the following steps:
Step 501: A second device acquires sensing demand information.
Step 502: The second device transmits second information to at least one of a wireless sensing signal transmitter and a wireless sensing signal receiver, where the second information includes: the sensing demand information and/or sensing signal related configuration information corresponding to the sensing demand information.
Step 503: The second device acquires at least one of a target measurement quantity and a target sensing result, where the target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

The procedure of acquiring the sensing demand information and/or the sensing signal related configuration information, the transmission process of the sensing signal, and the process of conversion from the target measurement quantity to the target sensing result in this embodiment of this application are the same as those in the method embodiments shown in FIG. 2, and will not be specifically limited herein.

Optionally, before the second device transmits the second information to at least one of the wireless sensing signal transmitter and the wireless sensing signal receiver, the third wireless sensing method further includes:
The second device determines the wireless sensing signal transmitter, the wireless sensing signal receiver, and the first device according to the sensing demand information.

This implementation is similar to the process in which the network function or network element of the core network (such as the sensing network function/sensing network element) determines the associated base station, the associated UE, and the tag participating in sensing according to the sensing demand in the method embodiments shown in FIG. 2, and will not be described in detail herein.

Optionally, the target measurement quantity includes:
demodulated information backscattered by the first device; and/or,
a wireless sensing measurement quantity depending on the participation of the first device, or a wireless sensing measurement quantity not depending on the participation of the first device.

Optionally, the operation that the second device acquires at least one of a target measurement quantity and a target sensing result includes:
The second device acquires the target measurement quantity, and determines the target sensing result according to the target measurement quantity. Or:
The second device acquires the target measurement quantity, acquires first information of the first device, and determines the target sensing result according to the target measurement quantity and the first information. Or:
The second device receives the target sensing result from any one of the following:
the wireless sensing signal transmitter, the wireless sensing signal receiver, a network-side device accessed by the wireless sensing signal transmitter, a network-side device accessed by the wireless sensing signal receiver, and a target core network element.

In an implementation, the second device may acquire the first information of the first device in the following manner: An EPC code or a tag ID of a selected tag participating in the sensing process is read by a serving base station or associated base station of the tag, and prior information of a selected target tag is determined accordingly from pre-stored prior information of a plurality of tags. Alternatively, the prior information of the selected target tag is read by the serving base station or associated base station of the tag.

This embodiment of this application is similar to the process in which the core network, the base station, and the UE determine the target sensing result according to the target measurement quantity, or the target measurement quantity and the first information in the method embodiments shown in FIG. 2, and will not be described in detail herein.

Optionally, the operation that the second device determines the wireless sensing signal transmitter, the wireless sensing signal receiver, and the first device according to the sensing demand information includes:
The second device acquires third information, where the third information includes: fourth information of terminals communicatively connected, fifth information of network-side devices communicatively connected, and first information of first devices communicatively connected, where the fourth information includes at least one of capability information and location information corresponding to the terminals, and the fifth information includes at least one of capability information and location information corresponding to the network-side devices.

The second device determines a sensing type according to the third information and the sensing demand information.

The second device determines the wireless sensing signal transmitter and the wireless sensing signal receiver matching the sensing type according to at least one of the fourth information and the fifth information.

The second device determines the first device according to the first information.

Optionally, the sensing type includes any one of the following:
A terminal receives a sensing signal that is transmitted by another terminal or a network-side device and at least partially backscattered by the first device.

A network-side device receives a sensing signal that is transmitted by another network-side device or a terminal and at least partially backscattered by the first device.

A terminal or a network-side device transmits a sensing signal and receives the sensing signal at least partially backscattered by the first device.

This implementation is similar to the process in which the network function or network element of the core network (such as the sensing network function/sensing network element) determines the associated base station, the associated UE, and the tag participating in sensing according to the sensing demand, the location information and/or capability information of each base station and UE, and the prior information and/or capability information of the tag in the method embodiments shown in FIG. 2, and will not be described in detail herein.

Optionally, when the sensing type is that a terminal receives a sensing signal that is transmitted by another terminal or a network-side device and at least partially backscattered by the first device, the wireless sensing signal transmitter includes at least one of a first network-side device and a first terminal, and the second wireless sensing signal receiver includes a second terminal.

Optionally, terminals in the wireless sensing signal transmitter and the wireless sensing signal receiver satisfy at least one of the following conditions:
capability information of the terminals meets the sensing demand;
location information of the terminals meets the sensing demand; and
the terminals access network-side devices meeting the sensing demand.

And/or:
A network-side device in the wireless sensing signal transmitter satisfies at least one of the following conditions:
capability information of the network-side device meets the sensing demand;
location information of the network-side device meets the sensing demand; and
the network-side device is a network-side device accessed by a terminal meeting the sensing demand.

And/or:
The first device satisfies at least one of the following conditions:
the first device accesses a terminal or a network-side device meeting the sensing demand;
prior information of the first device meets the sensing demand; and
capability information of the first device meets the sensing demand.

Optionally, the second device acquires the first information in the following manners:

The sensing demand information transmitted to the wireless sensing signal transmitter by the second device includes a target operating command, and the first information from the wireless sensing signal receiver is received, where the target operating command is used for controlling the first device to carry the first information in a backscattered sensing signal.

Or:
Sensing signal related configuration information transmitted to the wireless sensing signal transmitter by the second device is determined based on the sensing demand information including the target operating command, and the first information from the wireless sensing signal receiver is received.

Or:
The second device transmits second indication information to the network-side device or terminal accessed by the first device and receives the first information from the network-side device or terminal accessed by the first device, where the second indication information is used for instructing the network-side device or terminal accessed by the first device to read the first information.

Or:
The second device acquires the pre-stored first information.

Optionally, the method further includes at least one of the following:
The second device invokes an associated base station of the first device, and performs a second process on the first device through the associated base station, where the second process includes at least one of the following: reading the first information, writing the first information, inventorying the first information, supplying electric energy to the first device, controlling a first device satisfying sensing conditions corresponding to the sensing demand information to be in an active state, and controlling a first device not satisfying the sensing conditions to be in an inactive state, where the first device is located within a read-write range of the associated base station.

The second device performs a first process on the pre-stored first information, where the first process includes: at least one of updating, deleting, and adding.

Optionally, the third wireless sensing method further includes:
The second device acquires a reference measurement quantity or a reference measurement result.

The reference measurement quantity is a measurement quantity that is transmitted by the wireless sensing signal receiver and the wireless sensing signal transmitter and obtained by the first device performing a reference sensing process, and the target sensing result is determined based on the target measurement quantity and the reference measurement quantity.

Optionally, the operation that the second device acquires a reference measurement quantity or a reference measurement result includes:
The second device acquires a pre-stored reference measurement quantity or reference measurement result from at least one of the following:
the wireless sensing signal transmitter, the wireless sensing signal receiver, the first device, a network-side device accessed by the wireless sensing signal transmitter, a network-side device accessed by the wireless sensing signal receiver, a network-side device or terminal accessed by the first device, and a target core network element.

Optionally, the operation that a second device acquires sensing demand information includes:
The second device acquires sensing demand information transmitted or forwarded by a target core network element, where the target core network element includes: an application server, an access and mobility management function (AMF) network element, or a network management system.

Optionally, before the second device transmits the second information to at least one of the wireless sensing signal transmitter and the wireless sensing signal receiver, the method further includes:
The second device acquires target capability information, where the target capability information includes at least one of capability information of the wireless sensing signal transmitter, capability information of the wireless sensing signal receiver, and capability information of the first device.

The second device determines sensing signal related configuration information according to the target capability information and the sensing demand information.

Or:
The second device transmits first recommendation information to the wireless sensing signal transmitter according to the sensing demand information, and receives the sensing signal related configuration information from the wireless sensing signal transmitter.

Or:
The second device receives second recommendation information from the wireless sensing signal transmitter, and determines the sensing signal related configuration information according to the second recommendation information and the sensing demand information.

Or:
The second device receives first configuration information from the wireless sensing signal transmitter, and determines second configuration information according to the sensing demand information, where the sensing signal related configuration information includes the first configuration information and the second configuration information.

In some implementations, the process in which the second device transmits first recommendation information to the wireless sensing signal transmitter according to the sensing demand information and receives the sensing signal related configuration information from the wireless sensing signal transmitter is similar to the process in which the core network recommends sensing signal related configuration information to the base station (corresponding to a sensing signal transmission mode in which the base station transmits the sensing signal) or UE A (corresponding to a sensing signal transmission mode in which UE A transmits the sensing signal) according to the sensing demand and the base station or UE A finally determines the sensing signal related configuration information in the method embodiments shown in FIG. 2, and will not be specifically limited herein.

In other implementations, the process in which the second device receives second recommendation information from the wireless sensing signal transmitter and determines the sensing signal related configuration information according to the second recommendation information and the sensing demand information is similar to the process in which the base station (corresponding to a sensing signal transmission mode in which the base station transmits the sensing signal) or UE A (corresponding to a sensing signal transmission mode in which UE A transmits the sensing signal) recommends sensing signal related configuration information to the core network according to the sensing demand and the core network finally determines the sensing signal related configuration information in the method embodiments shown in FIG. 2, and will not be specifically limited herein.

Optionally, the sensing signal related configuration information includes at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

Optionally, the target measurement quantity includes:
a first measurement quantity, where the first measurement quantity is a measurement quantity related to the first device and includes at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

Optionally, the target measurement quantity further includes a second measurement quantity collected by the first device. The first device also has an information collection function.

In an implementation, the second device may invoke an associated base station of the first device to read a second measurement quantity collected by the first device, or may demodulate the sensing signal backscattered by the first device to obtain the second measurement quantity. Details are omitted herein.

Optionally, the target measurement quantity corresponds to sensing antennas or sensing resources one by one.

Optionally, the operation that the second device transmits second information to at least one of a wireless sensing signal transmitter and a wireless sensing signal receiver includes:
The second device transmits second information to the wireless sensing signal transmitter, where the wireless sensing signal transmitter is configured to forward the second information to the wireless sensing signal receiver.

Or:
The second device transmits second information to the wireless sensing signal transmitter, and transmits measurement demand information to the wireless sensing signal receiver, where the measurement demand information represents a sensing signal related measurement quantity to be measured by the wireless sensing signal receiver.

Optionally, the operation that the second device acquires at least one of a target measurement quantity and a target sensing result includes at least one of the following:
The second device receives a target measurement quantity from the wireless sensing signal receiver or the wireless sensing signal transmitter, and transmits the target measurement quantity to a core network or an application server, where the target sensing result is determined by the core network or the application server based on the target measurement quantity.

The second device receives a target measurement quantity from the wireless sensing signal receiver or the wireless sensing signal transmitter, and determines the target sensing result according to the target measurement quantity.

The second device receives a target sensing result from the wireless sensing signal transmitter, the wireless sensing signal receiver, a network-side device accessed by the wireless sensing signal receiver, or a network-side device accessed by the wireless sensing signal transmitter, where the target sensing result is determined by the wireless sensing signal transmitter, the wireless sensing signal receiver, the network-side device accessed by the wireless sensing signal receiver, or the network-side device accessed by the wireless sensing signal transmitter based on the target measurement quantity.

The third wireless sensing method provided by this embodiment of this application corresponds to the method embodiments shown in FIG. 2 and FIG. 4, and the same beneficial effects can be achieved. To avoid repetition, details are omitted herein.

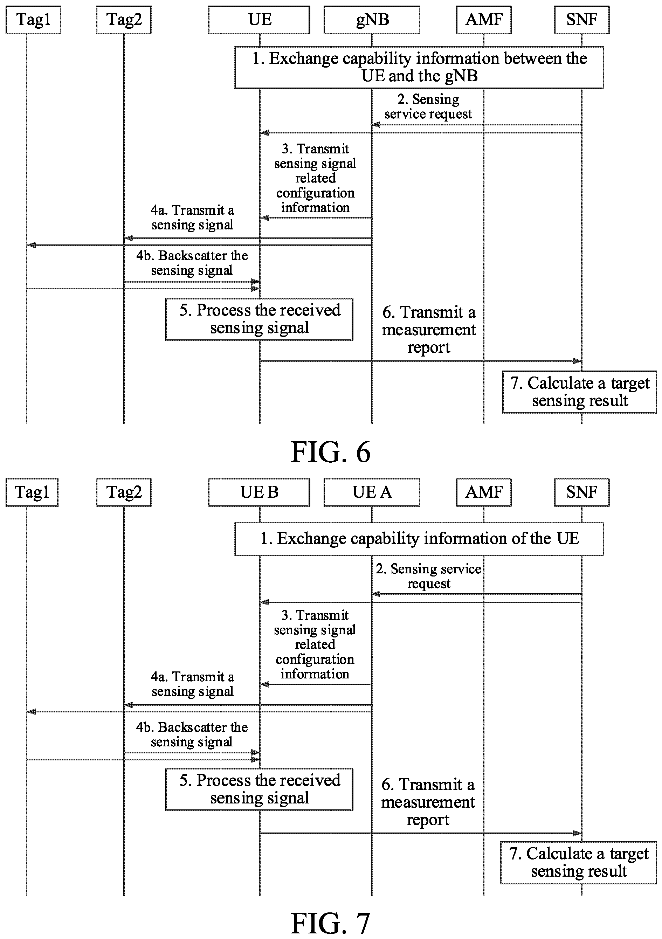

In order to explain the wireless sensing method provided by this embodiment of this application conveniently, the wireless sensing method provided by this embodiment of this application is illustrated with schematic diagrams of information interaction shown in FIG. 6 and FIG. 7:

### Embodiment 1

In the embodiments shown in FIG. 6, assuming that a UE receives a sensing signal transmitted by a gNB and at least partially backscattered by a tag and the conversion of a target measurement quantity to a target sensing result is completed by an SNF, the wireless sensing method includes the following interactive processes:
1. An AMF and/or the SNF acquire capability information of the UE and the gNB.
2. The gNB and/or the UE acquire a sensing service request (including first information) from the SNF.
3. The gNB transmits sensing signal related configuration information to the UE.
4a. The gNB transmits a sensing signal (for example, a reference signal).
4b. A tag (One or at least two tags) backscatters the sensing signal.
5. The UE processes the sensing signal backscattered by the tag to obtain a target measurement quantity.
6. The UE transmits a measurement report (including the target measurement quantity) to the SNF.
7. The SNF calculates a target sensing result according to the target measurement quantity.

### Embodiment 2

In the embodiments shown in FIG. 7, assuming that UE B receives a sensing signal transmitted by UE A and at least partially backscattered by a tag and the conversion of a target measurement quantity to a target sensing result is completed by an SNF, the wireless sensing method includes the following interactive processes:
1. An AMF and/or the SNF acquire capability information of UEs (including UE A and UE B).
2. UE A and/or UE B acquire a sensing service request (including first information) from the SNF.
3. UE A transmits sensing signal related configuration information to UE B.
4a. UE A transmits a sensing signal (for example, a reference signal).
4b. A tag (One or at least two tags) backscatters the sensing signal.
5. UE B processes the sensing signal backscattered by the tag to obtain a target measurement quantity.
6. UE B transmits a measurement report (including the target measurement quantity) to the SNF.
7. The SNF calculates a target sensing result according to the target measurement quantity.

Embodiments of this application further provide a wireless sensing system, including: a first device, a wireless sensing signal transmitter, and a wireless sensing signal receiver.

At least one of the wireless sensing signal transmitter and the wireless sensing signal receiver is configured to acquire second information. The second information includes: the sensing demand information and/or sensing signal related configuration information corresponding to the sensing demand information.

The wireless sensing signal transmitter is configured to determine the sensing signal related configuration information according to the sensing demand information, and transmit a sensing signal according to the sensing signal related configuration information, or, the wireless sensing signal transmitter is configured to transmit a sensing signal according to the acquired sensing signal related configuration information.

The first device is configured to backscatter the sensing signal.

The wireless sensing signal receiver is configured to measure the sensing signal that is transmitted by the wireless sensing signal transmitter and at least partially backscattered by the first device, so as to obtain a target measurement quantity.

In a specific implementation, the wireless sensing signal transmitter may be a network-side device (for example, a base station or a TRP) or a terminal, and the wireless sensing signal receiver may also be a network-side device (for example, a base station or a TRP) or a terminal. Specifically, the wireless sensing signal transmitter may be a first network-side device or a first terminal, and the wireless sensing signal receiver may be a second network-side device, a second terminal, a first network-side device, or a first terminal.

The first device in this embodiment of this application may perform various processes in the method embodiments shown in FIG. 2, and the wireless sensing signal receiver may perform various processes in the method embodiments shown in FIG. 4. Details are omitted herein.

Optionally, the wireless sensing system further includes: a second device.

The second device is communicatively connected to the wireless sensing signal transmitter, the wireless sensing signal receiver, and the first device, respectively.

The second device is configured to acquire the sensing demand information and transmit the sensing demand information to at least one of the wireless sensing signal transmitter and the wireless sensing signal receiver, or determine the sensing signal related configuration information according to the sensing demand information and transmit the sensing signal related configuration information to at least one of the wireless sensing signal transmitter and the wireless sensing signal receiver.

In this implementation, the second device may perform various processes in the method embodiments shown in FIG. 5. Details are omitted herein.

Further, the wireless sensing signal transmitter is further configured to transmit first indication information to the first device, the first indication information is used for indicating first information to be fed back to the wireless sensing signal receiver by the first device, and the first device is specifically configured to modulate the first information onto the sensing signal, so that the wireless sensing signal receiver receives the modulated sensing signal.

In this implementation, the first device may correspondingly modulate and backscatter the sensing signal according to an indication of the wireless sensing signal transmitter.

Optionally, the second device includes at least one of the following:
a sensing functional entity or a sensing network element in a core network; and
a sensing functional entity or a sensing network element in an access network.

Optionally, the sensing signal transmitted by the wireless sensing signal transmitter is a preset sensing signal sequence, and the wireless sensing signal receiver is specifically configured to receive a target sensing signal sequence that is transmitted from the wireless sensing signal transmitter and at least partially backscattered by the first device, and to perform a target signal process based on the target sensing signal sequence and the preset sensing signal sequence to obtain a target measurement quantity. The sensing signal related configuration information includes signal configuration information of the preset sensing signal sequence.

This implementation is an implementation described in the method embodiments shown in FIG. 4: The wireless sensing signal receiver receives a target sensing signal sequence that is transmitted from the wireless sensing signal transmitter and at least partially backscattered by the first device, and to perform a target signal process based on the target sensing signal sequence and the preset sensing signal sequence to obtain a target measurement quantity. The same beneficial effects can be achieved. Details are omitted herein.

Optionally, the first device includes at least one of a backscatter (Backscatter) tag and a radio frequency identification (RFID) tag.

Optionally, the wireless sensing signal transmitter includes a first network-side device or a first terminal, and the wireless sensing signal receiver includes a second terminal.

Optionally, a first node is configured to determine a target sensing result according to the target measurement quantity. The first node includes: at least one of the wireless sensing signal transmitter, the wireless sensing signal receiver, the second device, a network-side device accessed by the first terminal, or a network-side device accessed by the second terminal. Or:
The wireless sensing system further includes a target core network element, the first node is configured to transmit the target measurement quantity to the target core network element, and the target core network element is configured to determine a target sensing result according to the target measurement quantity.

Optionally, a second node is configured to transmit a reference measurement quantity or a reference measurement result to the first node or a first core network element.

The first node or the first core network element determines a target sensing result according to the reference measurement quantity or the reference measurement result and the target measurement quantity. The second node includes: at least one of the wireless sensing signal transmitter, the wireless sensing signal receiver, the second device, a network-side device accessed by the first terminal or a network-side device accessed by the second terminal, the first device, and a network-side device or terminal accessed by the first device.

Optionally, the target core network element includes: an application server, an access and mobility management function (AMF) network element, or a network management system.

Optionally, terminals in the wireless sensing signal transmitter and the wireless sensing signal receiver satisfy at least one of the following conditions:
capability information of the terminals meets the sensing demand;
location information of the terminals meets the sensing demand; and
the terminals access network-side devices meeting the sensing demand.

And/or:
A network-side device in the wireless sensing signal transmitter satisfies at least one of the following conditions:
capability information of the network-side device meets the sensing demand;
location information of the network-side device meets the sensing demand; and
the network-side device is a network-side device accessed by a terminal meeting the sensing demand.

And/or:
The first device satisfies at least one of the following conditions:
the first device accesses a terminal or a network-side device meeting the sensing demand;
prior information of the first device meets the sensing demand; and
capability information of the first device meets the sensing demand.

Optionally, the first device is attached to a sensing target corresponding to the sensing demand information, or the first device is located in a target sensing area corresponding to the sensing demand information.

The wireless sensing system provided by this embodiment of this application can perform various processes in the method embodiments shown in FIG. 2, FIG. 4, and FIG. 5, and the same beneficial effects can be achieved. To avoid repetition, details are omitted herein.

In the wireless sensing method provided by this embodiment of this application, an execution entity may be a wireless sensing apparatus. In this embodiment of this application, the wireless sensing apparatus provided by this embodiment of this application is explained with an example where the wireless sensing apparatus performs the wireless sensing method.

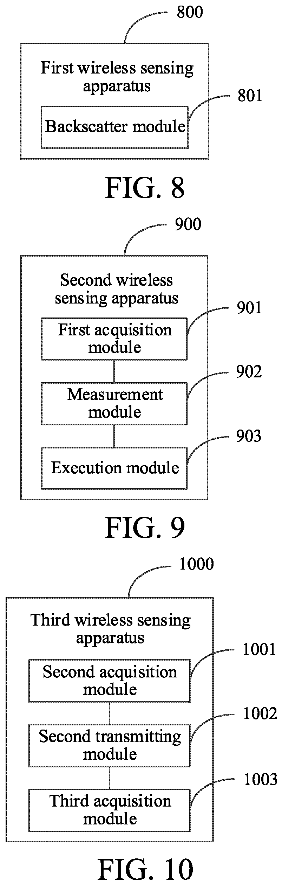

As shown in FIG. 8, a first wireless sensing apparatus provided by this embodiment of this application may be applied to a first device. As shown in FIG. 8, the first wireless sensing apparatus 800 may include the following modules:
a backscatter module 801, configured to backscatter a sensing signal to a wireless sensing signal receiver, where the sensing signal is from a wireless sensing signal transmitter.

Optionally, the first wireless sensing apparatus 800 further includes:
a first receiving module, configured to receive first indication information from the wireless sensing signal transmitter, where the first indication information is used for indicating first information to be fed back to the wireless sensing signal receiver by the first device.

The backscatter module 801 is specifically configured to:
modulate the first information onto the sensing signal, so that the wireless sensing signal receiver receives the modulated sensing signal.

Optionally, the first device includes at least one of a backscatter (Backscatter) tag and a radio frequency identification (RFID) tag.

Optionally, the first information includes at least one of the following: an identity of the first device, state indication information about the first device participating in sensing, a sensing time period of the first device, a sensing service occupation flag bit, angle of incidence and angle of incidence ranges of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of reflected signals of the first device, the number of transmitting antennas of a single first device, the number of receiving antennas of a single first device, antenna arrangement information of a single first device, arrangement information of an array including at least two first devices, error statistical distribution parameters of a reflected signal phase of the first device, an energy supply mode of the first device, electric quantity information of an active first device, an energy storage capability of the first device, an amplitude modulation capability of the first device, a phase modulation capability of the first device, a frequency modulation capability of the first device, an encryption algorithm type of the first device, and the type of a channel-coded forward error correction (FEC) of the first device and a corresponding encoding rate.

Optionally, the first wireless sensing apparatus 800 further includes:
a fourth acquisition module, configured to acquire a second sensing request message; and
an output module, configured to output a second sensing response message, where the second sensing response message indicates that the first device agrees to participate in a sensing process corresponding to the second sensing request message and/or to provide first information.

Optionally, the first device also has an information collection function, and the first wireless sensing apparatus 800 further includes:
a collection module, configured to collect a second measurement quantity corresponding to a sensing target, where the first information includes the second measurement quantity.

Optionally, the first wireless sensing apparatus 800 further includes:
a first reference measurement module, configured to perform reference measurement in cooperation with the wireless sensing signal transmitter and the wireless sensing signal receiver, where the reference measurement is used for acquiring a reference measurement quantity or a reference measurement result, and the target sensing result is determined based on the target measurement quantity and the reference measurement quantity or the reference measurement result.

The first wireless sensing apparatus 800 provided by this embodiment of this application can perform various processes performed by the first device in the method embodiments shown in FIG. 2, and the same beneficial effects can be achieved. To avoid repetition, details are omitted herein.

As shown in FIG. 9, a second wireless sensing apparatus provided by this embodiment of this application may be applied to a wireless sensing signal receiver. As shown in FIG. 9, the second wireless sensing apparatus 900 may include the following modules:
a first acquisition module 901, configured to acquire second information, where the second information includes: sensing demand information and/or sensing signal related configuration information corresponding to the sensing demand information;
a measurement module 902, configured to measure a sensing signal that is transmitted by a wireless sensing signal transmitter and at least partially backscattered by a first device according to the sensing signal related configuration information, so as to acquire a target measurement quantity; and
an execution module 903, configured to determine a target sensing result according to the target measurement quantity, or transmit the target measurement quantity.

Optionally, the measurement module 902 includes:
a receiving unit, configured to receive a target sensing signal sequence that is transmitted by the wireless sensing signal transmitter and at least partially backscattered by the first device; and
a signal processing unit, configured to perform a target signal process based on the target sensing signal sequence and a preset sensing signal sequence to obtain a target measurement quantity, where the sensing signal related configuration information includes signal configuration information of the preset sensing signal sequence that is transmitted by the wireless sensing signal transmitter.

Optionally, the target measurement quantity includes:
demodulated information backscattered by the first device; and/or,
a wireless sensing measurement quantity depending on the participation of the first device, or a wireless sensing measurement quantity not depending on the participation of the first device.

Optionally, the sensing signal related configuration information includes at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

Optionally, the target measurement quantity includes:
a first measurement quantity, where the first measurement quantity is a measurement quantity related to the first device and includes at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

Optionally, the second wireless sensing apparatus 900 further includes:
a second receiving module, configured to receive a target operating command; and
a reading module, configured to read first information of the first device according to the target operating command, and transmit the first information to a second device, where the target sensing result is a sensing result determined by the second device according to a target measurement result and the first information.

Optionally, the second wireless sensing apparatus 900 further includes:
a response module, configured to transmit a first sensing response message in response to receiving the sensing demand information or a first sensing request message, where the first sensing response message indicates that the wireless sensing signal receiver agrees to participate in a sensing process corresponding to the sensing demand information or the first sensing request message.

Optionally, the second wireless sensing apparatus 900 further includes:
a second reference measurement module, configured to perform reference measurement in cooperation with the wireless sensing signal transmitter and the first device, so as to acquire a reference measurement quantity; and
a first determination module, configured to determine a reference sensing result according to the reference measurement quantity, or transmit the reference measurement quantity.

The second wireless sensing apparatus 900 provided by this embodiment of this application can perform various processes performed by the wireless sensing signal receiver in the method embodiments shown in FIG. 4, and the same beneficial effects can be achieved. To avoid repetition, details are omitted herein.

The first wireless sensing apparatus 800 or the second wireless sensing apparatus 900 in this embodiment of this application may be an electronic device such as an electronic device having an operating system, or may be a component in an electronic device such as an integrated circuit or a chip. The electronic device may be a terminal or another device other than the terminal. Exemplarily, the terminal may include, but is not limited to, the type of the terminal 11 listed above, and the another device may be a server, a network attached storage (Network Attached Storage, NAS), or the like. This embodiment of this application is not specifically limited.

As shown in FIG. 10, a third wireless sensing apparatus provided by this embodiment of this application may be applied to a second device. As shown in FIG. 10, the third wireless sensing apparatus 1000 may include the following modules:
a second acquisition module 1001, configured to acquire sensing demand information;
a second transmitting module 1002, configured to transmit second information to at least one of a wireless sensing signal transmitter and a wireless sensing signal receiver, where the second information includes: the sensing demand information and/or sensing signal related configuration information corresponding to the sensing demand information; and
a third acquisition module 1003, configured to acquire at least one of a target measurement quantity and a target sensing result, where the target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

Optionally, the third wireless sensing apparatus 1000 further includes:
a second determination module, configured to determine the wireless sensing signal transmitter, the wireless sensing signal receiver, and the first device according to the sensing demand information.

Optionally, the target measurement quantity includes:
demodulated information backscattered by the first device; and/or,
a wireless sensing measurement quantity depending on the participation of the first device, or a wireless sensing measurement quantity not depending on the participation of the first device.

Optionally, the third acquisition module 1003 is specifically configured to:
acquire the target measurement quantity, and determine the target sensing result according to the target measurement quantity; or,
acquire the target measurement quantity, acquire first information of the first device, and determine the target sensing result according to the target measurement quantity and the first information; or,
receive the target sensing result from any one of the following:
   the wireless sensing signal transmitter, the wireless sensing signal receiver, a network-side device accessed by the wireless sensing signal transmitter, a network-side device accessed by the wireless sensing signal receiver, and a target core network element.

Optionally, the second determination module includes:
an acquisition unit, configured to acquire third information, where the third information includes: fourth information of terminals communicatively connected, fifth information of network-side devices communicatively connected, and first information of first devices communicatively connected, where the fourth information includes at least one of capability information and location information corresponding to the terminals, and the fifth information includes at least one of capability information and location information corresponding to the network-side devices;
a second determination unit, configured to determine a sensing type according to the third information and the sensing demand information;
a third determination unit, configured to determine the wireless sensing signal transmitter and the wireless sensing signal receiver matching the sensing type according to at least one of the fourth information and the fifth information; and
a fourth determination unit, configured to determine the first device according to the first information.

Optionally, the sensing type includes any one of the following:
A terminal receives a sensing signal that is transmitted by another terminal or a network-side device and at least partially backscattered by the first device.

A network-side device receives a sensing signal that is transmitted by another network-side device or a terminal and at least partially backscattered by the first device.

A terminal or a network-side device transmits a sensing signal and receives the sensing signal at least partially backscattered by the first device.

Optionally, when the sensing type is that a terminal receives a sensing signal that is transmitted by another terminal or a network-side device and at least partially backscattered by the first device, the wireless sensing signal transmitter includes at least one of a first network-side device and a first terminal, and the second wireless sensing signal receiver includes a second terminal.

Optionally, terminals in the wireless sensing signal transmitter and the wireless sensing signal receiver satisfy at least one of the following conditions:
capability information of the terminals meets the sensing demand;
location information of the terminals meets the sensing demand; and
the terminals access network-side devices meeting the sensing demand.

And/or:
A network-side device in the wireless sensing signal transmitter satisfies at least one of the following conditions:
capability information of the network-side device meets the sensing demand;
location information of the network-side device meets the sensing demand; and
the network-side device is a network-side device accessed by a terminal meeting the sensing demand.

And/or:
The first device satisfies at least one of the following conditions:
the first device accesses a terminal or a network-side device meeting the sensing demand;
prior information of the first device meets the sensing demand; and
capability information of the first device meets the sensing demand.

Optionally, the second device acquires the first information in the following manners:
The sensing demand information transmitted to the wireless sensing signal transmitter by the second device includes a target operating command, and the first information from the wireless sensing signal receiver is received, where the target operating command is used for controlling the first device to carry the first information in a backscattered sensing signal.

Or:
Sensing signal related configuration information transmitted to the wireless sensing signal transmitter by the second device is determined based on the sensing demand information including the target operating command, and the first information from the wireless sensing signal receiver is received.

Or:
The second device transmits second indication information to the network-side device or terminal accessed by the first device and receives the first information from the network-side device or terminal accessed by the first device, where the second indication information is used for instructing the network-side device or terminal accessed by the first device to read the first information.

Or:
The second device acquires the pre-stored first information.

Optionally, the third wireless sensing apparatus 1000 further includes at least one of the following:
an invocation module, configured to invoke an associated base station of the first device, and perform a second process on the first device through the associated base station, where the second process includes at least one of the following: reading the first information, writing the first information, inventorying the first information, supplying electric energy to the first device, controlling a first device satisfying sensing conditions corresponding to the sensing demand information to be in an active state, and controlling a first device not satisfying the sensing conditions to be in an inactive state, where the first device is located within a read-write range of the associated base station; and
a processing module, configured to perform a first process on the pre-stored first information, where the first process includes: at least one of updating, deleting, and adding.

Optionally, the third wireless sensing apparatus 1000 further includes:
a fifth acquisition module, configured to acquire a reference measurement quantity or a reference measurement result.

The reference measurement quantity is a measurement quantity that is transmitted by the wireless sensing signal receiver and the wireless sensing signal transmitter and obtained by the first device performing a reference sensing process, and the target sensing result is determined based on the target measurement quantity and the reference measurement quantity.

Optionally, the fifth acquisition module is further configured to:
acquire a pre-stored reference measurement quantity or reference measurement result from at least one of the following:
the wireless sensing signal transmitter, the wireless sensing signal receiver, the first device, a network-side device accessed by the wireless sensing signal transmitter, a network-side device accessed by the wireless sensing signal receiver, a network-side device or terminal accessed by the first device, and a target core network element.

Optionally, the second acquisition module 1001 is specifically configured to:
acquire sensing demand information transmitted or forwarded by a target core network element, where the target core network element includes: an application server, an access and mobility management function (AMF) network element, or a network management system.

Optionally, the third wireless sensing apparatus 1000 further includes:
a sixth acquisition module, configured to acquire target capability information, where the target capability information includes at least one of capability information of the wireless sensing signal transmitter, capability information of the wireless sensing signal receiver, and capability information of the first device;
a third determination module, configured to determine sensing signal related configuration information according to the target capability information and the sensing demand information;
   or,
a transmission module, configured to transmit first recommendation information to the wireless sensing signal transmitter according to the sensing demand information, and receive the sensing signal related configuration information from the wireless sensing signal transmitter;
   or,
a fourth determination module, configured to receive second recommendation information from the wireless sensing signal transmitter, and determine the sensing signal related configuration information according to the second recommendation information and the sensing demand information;
   or,
a fifth determination module, configured to receive first configuration information from the wireless sensing signal transmitter, and determine second configuration information according to the sensing demand information, where the sensing signal related configuration information includes the first configuration information and the second configuration information.

Optionally, the sensing signal related configuration information includes at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

Optionally, the target measurement quantity includes:
a first measurement quantity, where the first measurement quantity is a measurement quantity related to the first device and includes at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

Optionally, the target measurement quantity further includes a second measurement quantity collected by the first device. The first device also has an information collection function.

Optionally, the target measurement quantity corresponds to sensing antennas or sensing resources one by one.

Optionally, the second transmitting module 1002 is specifically configured to:
transmit second information to the wireless sensing signal transmitter, where the wireless sensing signal transmitter is configured to forward the second information to the wireless sensing signal receiver;
   or,
transmit second information to the wireless sensing signal transmitter, and transmit measurement demand information to the wireless sensing signal receiver, where the measurement demand information represents a sensing signal related measurement quantity to be measured by the wireless sensing signal receiver.

Optionally, the third acquisition module 1003 includes at least one of the following:
a first transmission unit, configured to receive a target measurement quantity from the wireless sensing signal receiver or the wireless sensing signal transmitter, and transmit the target measurement quantity to a core network or an application server, where the target sensing result is determined by the core network or the application server based on the target measurement quantity;
a second transmission unit, configured to receive a target measurement quantity from the wireless sensing signal receiver or the wireless sensing signal transmitter, and determine the target sensing result according to the target measurement quantity; and
a third transmission unit, configured to receive a target sensing result from the wireless sensing signal transmitter, the wireless sensing signal receiver, a network-side device accessed by the wireless sensing signal receiver, or a network-side device accessed by the wireless sensing signal transmitter, where the target sensing result is determined by the wireless sensing signal transmitter, the wireless sensing signal receiver, the network-side device accessed by the wireless sensing signal receiver, or the network-side device accessed by the wireless sensing signal transmitter based on the target measurement quantity.

The third wireless sensing apparatus 1000 provided by this embodiment of this application can perform various processes performed by the second device in the method embodiments shown in FIG. 5, and the same beneficial effects can be achieved. To avoid repetition, details are omitted herein.

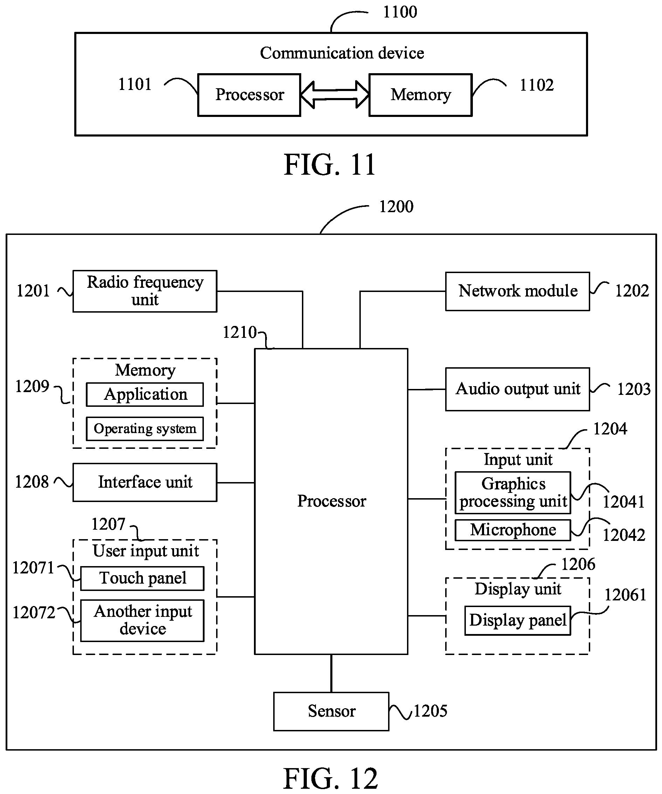

Optionally, as shown in FIG. 11, embodiments of this application further provide a communication device 1100, including a processor 1101 and a memory 1102. The memory 1102 stores programs or instructions executable on the processor 1101. For example, when the communication device 1100 is a terminal, the programs or instructions, when executed by the processor 1101, implement various steps of the method embodiments shown in FIG. 4, and the same technical effects can be achieved. Or, when the communication device 1100 is a network-side device, the programs or instructions, when executed by the processor 101, implement various steps of the method embodiments shown in FIG. 4 or FIG. 5. Or, when the communication device 1100 is a backscatter communications device, the programs or instructions, when executed by the processor 101, implement various steps of the method embodiments shown in FIG. 2. The same technical effects can be achieved. To avoid repetition, details are omitted herein.

Embodiments of this application further provide a terminal, including a processor and a communication interface. In a case that a wireless sensing signal receiver is the terminal, the communication interface is configured to acquire second information. The second information includes: sensing demand information and/or sensing signal related configuration information corresponding to the sensing demand information. The communication interface is further configured to measure a sensing signal that is transmitted by a wireless sensing signal transmitter and at least partially backscattered by a first device according to the sensing signal related configuration information, so as to acquire a target measurement quantity. The processor is configured to determine a target sensing result according to the target measurement quantity, or the communication interface is configured to transmit the target measurement quantity.

Specifically, FIG. 12 is a schematic diagram depicting a hardware structure of a terminal according to embodiments of this application.

The terminal 1200 includes, but is not limited to, at least some components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

It will be appreciated by those skilled in the art that the terminal 1200 may further include a power supply (such as a battery) for supplying power to the components. The power supply may be logically connected to the processor 1210 by a power management system, thereby implementing functions such as charging, discharging, and power consumption management by using the power management system. The terminal structure shown in FIG. 12 does not constitute a limitation on the terminal, and the terminal may include more or fewer components than shown, or combine some components, or have different component arrangements. Details are omitted herein.

It will be understood that in this embodiment of this application, the input unit 1204 may include a graphics processing unit (Graphics Processing Unit, GPU) 12041 and a microphone 12042. The graphics processing unit 12041 performs processing on image data of a static picture or a video that is obtained by an image capture apparatus (for example, a camera) in a video capture mode or an image capture mode. The display unit 1206 may include a display panel 12061. The display panel 12061 may be configured by using a liquid crystal display, an organic light-emitting diode, or the like. The user input unit 1207 includes at least one of a touch panel 12071 and another input device 12072. The touch panel 12071 may also be referred to as a touch screen. The touch panel 12071 may include two parts: a touch detection apparatus and a touch controller. The another input device 12072 may include, but is not limited to, a physical keyboard, a functional key (such as a volume control key or a switch key), a track ball, a mouse, and a joystick. Details are omitted herein.

In this embodiment of this application, the radio frequency unit 1201 receives downlink data from a network-side device and may then transmit the downlink data to the processor 1210 for processing. In addition, the radio frequency unit 1201 may transmit uplink data to the network-side device. Generally, the radio frequency unit 1201 includes, but is not limited to, an antenna, an amplifier, a transceiver, a coupler, a low noise amplifier, a duplexer, and the like.

The memory 1209 may be configured to store software programs or instructions and various data. The memory 1209 may mainly include a first storage area for storing programs or instructions and a second storage area for storing data. The first storage area may store an operating system, an application or instruction required by at least one function (such as a sound playback function and an image display function), and the like. Furthermore, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1209 in this embodiment of this application includes, but is not limited to, these memories and any other suitable types of memories.

The processor 1210 may include one or more processing units. Optionally, the processor 1210 integrates an application processor and a modem processor. The application processor mainly processes operations involving an operating system, a user interface, and an application. The modem processor such as a baseband processor mainly processes wireless communication signals. It will be understood that the foregoing modem may either not be integrated into the processor 1210.

The radio frequency unit 1201 is configured to acquire second information. The second information includes: sensing demand information and/or sensing signal related configuration information corresponding to the sensing demand information.

The radio frequency unit 1201 is further configured to measure a sensing signal that is transmitted by a wireless sensing signal transmitter and at least partially backscattered by a first device according to the sensing signal related configuration information, so as to acquire a target measurement quantity.

The processor 1210 is configured to determine a target sensing result according to the target measurement quantity, or the radio frequency unit 1201 is further configured to transmit the target measurement quantity.

Optionally, the radio frequency unit 1201 measures a sensing signal that is transmitted by a wireless sensing signal transmitter and at least partially backscattered by a first device according to the sensing signal related configuration information, so as to acquire a target measurement quantity, as follows.

The radio frequency unit 1201 is configured to receive a target sensing signal sequence that is transmitted by the wireless sensing signal transmitter and at least partially backscattered by the first device.

The processor 1210 is configured to perform a target signal process based on the target sensing signal sequence and a preset sensing signal sequence to obtain a target measurement quantity. The sensing signal related configuration information includes signal configuration information of the preset sensing signal sequence that is transmitted by the wireless sensing signal transmitter.

Optionally, the target measurement quantity includes:
demodulated information backscattered by the first device; and/or,
a wireless sensing measurement quantity depending on the participation of the first device, or a wireless sensing measurement quantity not depending on the participation of the first device.

Optionally, the sensing signal related configuration information includes at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

Optionally, the target measurement quantity includes:
a first measurement quantity, where the first measurement quantity is a measurement quantity related to the first device and includes at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

Optionally, the radio frequency unit 1201 is further configured to receive a target operating command.

The radio frequency unit 1201 is further configured to read first information of the first device according to the target operating command, and transmit the first information to a second device. The target sensing result is a sensing result determined by the second device according to a target measurement result and the first information.

Optionally, before the measuring, by the wireless sensing signal receiver, a sensing signal that is transmitted by a wireless sensing signal transmitter and at least partially backscattered by a first device according to the sensing signal related configuration information, so as to acquire a target measurement quantity, the radio frequency unit 1201 is further configured to:
transmit a first sensing response message in response to receiving the sensing demand information or a first sensing request message, where the first sensing response message indicates that the wireless sensing signal receiver agrees to participate in a sensing process corresponding to the sensing demand information or the first sensing request message.

Optionally, before the measuring, by the wireless sensing signal receiver, a sensing signal that is transmitted by a wireless sensing signal transmitter and at least partially backscattered by a first device according to the sensing signal related configuration information, so as to acquire a target measurement quantity, the radio frequency unit 1201 is further configured to: perform reference measurement in cooperation with the wireless sensing signal transmitter and the first device, so as to acquire a reference measurement quantity.

The processor 1210 is configured to determine a reference sensing result according to the reference measurement quantity, or the radio frequency unit 1201 is further configured to transmit the reference measurement quantity.

The terminal 1200 provided by this embodiment of this application can perform various processes performed by the second wireless sensing apparatus 900 shown in FIG. 9, and the same beneficial effects can be achieved. To avoid repetition, details are omitted herein.

Embodiments of this application further provide a network-side device, including a processor and a communication interface.

In a case that a wireless sensing signal receiver is the network-side device, the communication interface is configured to acquire second information. The second information includes: sensing demand information and/or sensing signal related configuration information corresponding to the sensing demand information. The communication interface is further configured to measure a sensing signal that is transmitted by a wireless sensing signal transmitter and at least partially backscattered by a first device according to the sensing signal related configuration information, so as to acquire a target measurement quantity. The processor is configured to determine a target sensing result according to the target measurement quantity, or transmit the target measurement quantity.

Or:
The communication interface is configured to acquire sensing demand information, and transmit second information to at least one of a wireless sensing signal transmitter and a wireless sensing signal receiver. The second information includes: the sensing demand information and/or sensing signal related configuration information corresponding to the sensing demand information. The communication interface is further configured to acquire at least one of a target measurement quantity and a target sensing result. The target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

The network-side device embodiments correspond to the foregoing network-side device method embodiments. Each implementation process and implementation mode of the foregoing method embodiments may be applied to the network-side device embodiments, and the same technical effects can be achieved.

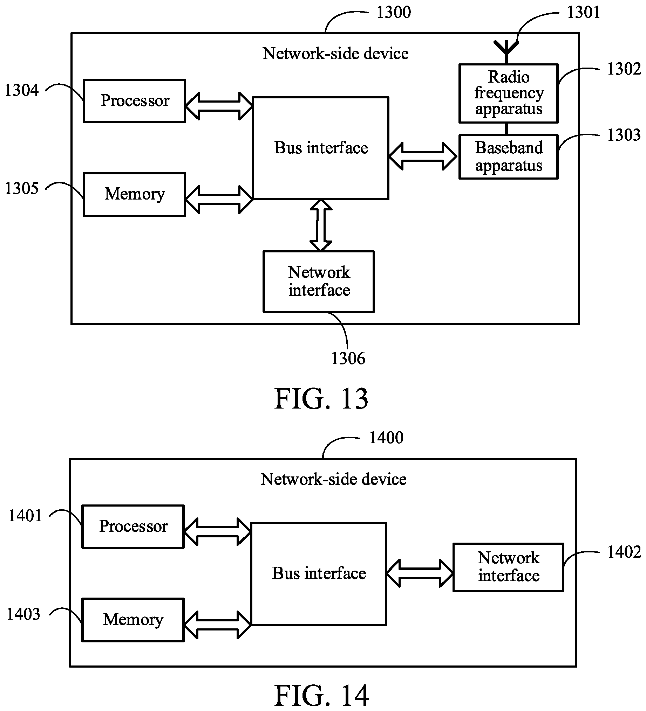

Specifically, embodiments of this application further provide a network-side device. As shown in FIG. 13, a network-side device 1300 includes: an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301 and transmits the received information to the baseband apparatus 1303 for processing. In a downlink direction, the baseband apparatus 1303 processes information to be transmitted and transmits the information to the radio frequency apparatus 1302. The radio frequency apparatus 1302 processes the received information and transmits the information via the antenna 1301.

The method performed by the network-side device in the above embodiments may be implemented in the baseband apparatus 1303. The baseband apparatus 1303 includes a baseband processor.

The baseband apparatus 1303 may, for example, include at least one baseband board. The baseband board is provided with a plurality of chips. As shown in FIG. 13, one of the chips is, for example, the baseband processor, connected to the memory 1305 through a bus interface to invoke programs in the memory 1305 to perform a network device operation shown in the above method embodiments.

The network-side device may further include a network interface 1306. The interface is, for example, a common public radio interface (common public radio interface, CPRI).

Specifically, the network-side device 1300 in this embodiment of this application further includes: instructions or programs stored in the memory 1305 and executable on the processor 1304. The processor 1304 invokes the instructions or programs in the memory 1305 to implement the method performed by each module shown in FIG. 9 (a wireless sensing signal receiver is the network-side device) or FIG. 10 (a second device is located in an access network), and the same technical effects can be achieved. To avoid repetition, details are omitted herein.

Embodiments of this application further provide a network-side device. As shown in FIG. 14, a network-side device 1400 includes: a processor 1401, a network interface 1402, and a memory 1403. The network interface 1402 is, for example, a common public radio interface (CPRI).

Specifically, the network-side device 1400 in this embodiment of this application further includes: instructions or programs stored in the memory 1403 and executable on the processor 1401. The processor 1401 invokes the instructions or programs in the memory 1403 to implement the method performed by each module shown in FIG. 10 (a second device is located in a core network), and the same technical effects can be achieved. To avoid repetition, details are omitted herein.

Embodiments of this application further provide a readable storage medium. The readable storage medium stores programs or instructions. The programs or instructions, when executed by a processor, implement various processes of the method embodiments in FIG. 2, FIG. 4, or FIG. 5, and the same technical effects can be achieved. To avoid repetition, details are omitted herein.

The processor is a processor in the terminal described in the foregoing embodiments. The readable storage medium includes a computer-readable storage medium, such as a computer read-only memory (ROM), a random access memory (RAM), a magnetic disk, an optical disc, or the like.

Embodiments of this application additionally provide a chip. The chip includes a processor and a communication interface. The communication interface is coupled to the processor. The processor is configured to execute programs or instructions to implement various processes of the method embodiments in FIG. 2, FIG. 4, or FIG. 5, and the same technical effects can be achieved. To avoid repetition, details are omitted herein.

It should be understood that the chip referred to in this embodiment of this application may also be referred to as a system-on-chip, a system chip, a chip system, a system-on-a-chip, or the like.

Embodiments of this application additionally provide a computer program product. The computer program product is stored in a storage medium. The computer program product is executed by at least one processor to implement various processes of the method embodiments in FIG. 2, FIG. 4, or FIG. 5, and the same technical effects can be achieved. To avoid repetition, details are omitted herein.

Embodiments of this application further provide a wireless sensing system, including: a terminal and a network-side device. The network-side device may be configured to perform the steps of the wireless sensing method as shown in FIG. 4 (that is, a wireless sensing signal receiver is the network-side device) and FIG. 5. Alternatively, the terminal may be configured to perform the steps of the wireless sensing method as shown in FIG. 4 (that is, a wireless sensing signal receiver is the terminal), and the network-side device may be configured to perform the steps of the wireless sensing method as shown in FIG. 5.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Furthermore, it should be noted that the scope of the method and apparatus in the implementations of this application is not limited to performing functions in the order shown or discussed, but may also include performing functions in a substantially simultaneous manner or in reverse order depending on the functions involved. For example, the described methods may be performed in a different order than described, and various steps may be added, omitted, or combined. In addition, features described with reference to some examples may be combined in other examples.

According to the descriptions in the above implementations, those skilled in the art may clearly learn that the method according to the foregoing embodiment may be implemented by relying on software and a necessary common hardware platform, and may be definitely implemented by hardware. However, in many cases, the former is a preferred implementation. Based on such an understanding, the technical solution of this application, either inherently or in any part contributing to the related art, may be embodied in the form of a computer software product. The computer software product is stored in a storage medium (such as a ROM/RAM, a magnetic disk, and an optical disc), and includes a plurality of instructions for enabling a terminal (which may be a mobile phone, a computer, a server, an air conditioner, or a network device) to perform the method according to the various embodiments of this application.

Embodiments of this application have been described above with reference to the accompanying drawings. However, this application is not limited to the specific implementations described above, and the specific implementations described above are merely exemplary and not limitative. Those of ordinary skill in the art may make various variations under the teaching of this application without departing from the spirit of this application and the protection scope of the claims, and such variations all fall within the protection scope of this application.

## Claims

1. A wireless sensing method, the method comprising:
backscattering, by a first device, a sensing signal to a wireless sensing signal receiver, wherein the sensing signal is from a wireless sensing signal transmitter.

2. The method according to claim 1, wherein before the backscattering, by a first device, a sensing signal to a wireless sensing signal receiver, the method further comprises:
receiving, by the first device, first indication information from the wireless sensing signal transmitter, wherein the first indication information is used for indicating first information to be fed back to the wireless sensing signal receiver by the first device; and
the backscattering, by a first device, a sensing signal to a wireless sensing signal receiver comprises:
modulating, by the first device, the first information onto the sensing signal, so that the wireless sensing signal receiver receives the modulated sensing signal.

3. The method according to claim 2, wherein the first information comprises at least one of the following: an identity of the first device, state indication information about the first device participating in sensing, a sensing time period of the first device, a sensing service occupation flag bit, angle of incidence and angle of incidence ranges of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of reflected signals of the first device, the number of transmitting antennas of a single first device, the number of receiving antennas of a single first device, antenna arrangement information of a single first device, arrangement information of an array comprising at least two first devices, error statistical distribution parameters of a reflected signal phase of the first device, an energy supply mode of the first device, electric quantity information of an active first device, an energy storage capability of the first device, an amplitude modulation capability of the first device, a phase modulation capability of the first device, a frequency modulation capability of the first device, an encryption algorithm type of the first device, and the type of a channel-coded forward error correction (FEC) of the first device and a corresponding encoding rate.

4. The method according to any one of claims 1 to 3, wherein before the backscattering, by a first device, a sensing signal to a wireless sensing signal receiver, the method further comprises:
acquiring, by the first device, a second sensing request message; and
outputting, by the first device, a second sensing response message, wherein the second sensing response message indicates that the first device agrees to participate in a sensing process corresponding to the second sensing request message and/or to provide first information.

5. The method according to claim 2, wherein the first device also has an information collection function, and the method further comprises:
collecting, by the first device, a second measurement quantity corresponding to a sensing target, wherein the first information comprises the second measurement quantity.

6. A wireless sensing apparatus, applied to a first device, the apparatus comprising:
a backscatter module, configured to backscatter a sensing signal to a wireless sensing signal receiver, wherein the sensing signal is from a wireless sensing signal transmitter.

7. A wireless sensing method, the method comprising:
acquiring, by a wireless sensing signal receiver, second information, wherein the second information comprises: sensing demand information and/or sensing signal related configuration information corresponding to the sensing demand information;
measuring, by the wireless sensing signal receiver, a sensing signal that is transmitted by a wireless sensing signal transmitter and at least partially backscattered by a first device according to the sensing signal related configuration information, so as to acquire a target measurement quantity; and
determining, by the wireless sensing signal receiver, a target sensing result according to the target measurement quantity, or transmitting the target measurement quantity.

8. The method according to claim 7, wherein the measuring, by the wireless sensing signal receiver, a sensing signal that is transmitted by a wireless sensing signal transmitter and at least partially backscattered by a first device according to the sensing signal related configuration information, so as to acquire a target measurement quantity comprises:
receiving, by the wireless sensing signal receiver, a target sensing signal sequence that is transmitted by the wireless sensing signal transmitter and at least partially backscattered by the first device; and
performing, by the wireless sensing signal receiver, a target signal process based on the target sensing signal sequence and a preset sensing signal sequence to obtain a target measurement quantity, wherein the sensing signal related configuration information comprises signal configuration information of the preset sensing signal sequence that is transmitted by the wireless sensing signal transmitter.

9. The method according to claim 7 or 8, wherein the target measurement quantity comprises:
demodulated information backscattered by the first device; and/or,
a wireless sensing measurement quantity depending on the participation of the first device, or a wireless sensing measurement quantity not depending on the participation of the first device.

10. The method according to any one of claims 7 to 9, wherein the sensing signal related configuration information comprises at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

11. The method according to any one of claims 7 to 9, wherein the target measurement quantity comprises:
a first measurement quantity, wherein the first measurement quantity is a measurement quantity related to the first device and comprises at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

12. The method according to claim 7 or 8, wherein the method further comprises:
receiving, by the wireless sensing signal receiver, a target operating command; and
reading, by the wireless sensing signal receiver, first information of the first device according to the target operating command, and transmitting the first information to a second device, wherein the target sensing result is a sensing result determined by the second device according to a target measurement result and the first information.

13. The method according to any one of claims 7 to 12, wherein before the measuring, by the wireless sensing signal receiver, a sensing signal that is transmitted by a wireless sensing signal transmitter and at least partially backscattered by a first device according to the sensing signal related configuration information, so as to acquire a target measurement quantity, the method further comprises:
transmitting, by the wireless sensing signal receiver, a first sensing response message in response to receiving the sensing demand information or a first sensing request message, wherein the first sensing response message indicates that the wireless sensing signal receiver agrees to participate in a sensing process corresponding to the sensing demand information or the first sensing request message.

14. The method according to any one of claims 7 to 13, wherein before the measuring, by the wireless sensing signal receiver, a sensing signal that is transmitted by a wireless sensing signal transmitter and at least partially backscattered by a first device according to the sensing signal related configuration information, so as to acquire a target measurement quantity, the method further comprises:
performing, by the wireless sensing signal receiver, reference measurement in cooperation with the wireless sensing signal transmitter and the first device, so as to acquire a reference measurement quantity; and
determining, by the wireless sensing signal receiver, a reference sensing result according to the reference measurement quantity, or transmitting the reference measurement quantity.

15. A wireless sensing apparatus, applied to a wireless sensing signal receiver, the apparatus comprising:
a first acquisition module, configured to acquire second information, wherein the second information comprises: sensing demand information and/or sensing signal related configuration information corresponding to the sensing demand information;
a measurement module, configured to measure a sensing signal that is transmitted by a wireless sensing signal transmitter and at least partially backscattered by a first device according to the sensing signal related configuration information, so as to acquire a target measurement quantity; and
an execution module, configured to determine a target sensing result according to the target measurement quantity, or transmit the target measurement quantity.

16. A wireless sensing method, the method comprising:
acquiring, by a second device, sensing demand information;
transmitting, by the second device, second information to at least one of a wireless sensing signal transmitter and a wireless sensing signal receiver, wherein the second information comprises: the sensing demand information and/or sensing signal related configuration information corresponding to the sensing demand information; and
acquiring, by the second device, at least one of a target measurement quantity and a target sensing result, wherein the target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

17. The method according to claim 16, wherein before the transmitting, by the second device, second information to at least one of a wireless sensing signal transmitter and a wireless sensing signal receiver, the method further comprises:
determining, by the second device, the wireless sensing signal transmitter, the wireless sensing signal receiver, and the first device according to the sensing demand information.

18. The method according to claim 16 or 17, wherein the acquiring, by the second device, at least one of a target measurement quantity and a target sensing result comprises:
acquiring, by the second device, the target measurement quantity, and determining the target sensing result according to the target measurement quantity; or,
acquiring, by the second device, the target measurement quantity, acquiring first information of the first device, and determining the target sensing result according to the target measurement quantity and the first information; or,
receiving, by the second device, the target sensing result from any one of the following:
the wireless sensing signal transmitter, the wireless sensing signal receiver, a network-side device accessed by the wireless sensing signal transmitter, a network-side device accessed by the wireless sensing signal receiver, and a target core network element.

19. The method according to claim 17, wherein the determining, by the second device, the wireless sensing signal transmitter, the wireless sensing signal receiver, and the first device according to the sensing demand information comprises:
acquiring, by the second device, third information, wherein the third information comprises: fourth information of terminals communicatively connected, fifth information of network-side devices communicatively connected, and first information of first devices communicatively connected, wherein the fourth information comprises at least one of capability information and location information corresponding to the terminals, and the fifth information comprises at least one of capability information and location information corresponding to the network-side devices;
determining, by the second device, a sensing type according to the third information and the sensing demand information;
determining, by the second device, the wireless sensing signal transmitter and the wireless sensing signal receiver matching the sensing type according to at least one of the fourth information and the fifth information; and
determining, by the second device, the first device according to the first information.

20. The method according to claim 19, wherein the sensing type comprises any one of the following:
receiving, by a terminal, a sensing signal that is transmitted by another terminal or a network-side device and at least partially backscattered by the first device;
receiving, by a network-side device, a sensing signal that is transmitted by another network-side device or a terminal and at least partially backscattered by the first device; and
transmitting, by a terminal or a network-side device, a sensing signal, and receiving the sensing signal at least partially backscattered by the first device.

21. The method according to claim 19 or 20, wherein terminals in the wireless sensing signal transmitter and the wireless sensing signal receiver satisfy at least one of the following conditions:
capability information of the terminals meets the sensing demand;
location information of the terminals meets the sensing demand; and
the terminals access network-side devices meeting the sensing demand;
and/or,
a network-side device in the wireless sensing signal transmitter satisfies at least one of the following conditions:
capability information of the network-side device meets the sensing demand;
location information of the network-side device meets the sensing demand; and
the network-side device is a network-side device accessed by a terminal meeting the sensing demand;
and/or,
the first device satisfies at least one of the following conditions:
the first device accesses a terminal or a network-side device meeting the sensing demand;
prior information of the first device meets the sensing demand; and
capability information of the first device meets the sensing demand.

22. The method according to claim 19 or 20, wherein the second device acquires the first information in the following manners:
the sensing demand information transmitted to the wireless sensing signal transmitter by the second device comprises a target operating command, and the first information from the wireless sensing signal receiver is received, wherein the target operating command is used for controlling the first device to carry the first information in a backscattered sensing signal;
or,
sensing signal related configuration information transmitted to the wireless sensing signal transmitter by the second device is determined based on the sensing demand information comprising the target operating command, and the first information from the wireless sensing signal receiver is received;
or,
the second device transmits second indication information to the network-side device or terminal accessed by the first device and receives the first information from the network-side device or terminal accessed by the first device, wherein the second indication information is used for instructing the network-side device or terminal accessed by the first device to read the first information;
or,
the second device acquires the pre-stored first information.

23. The method according to claim 19 or 20, wherein the method further comprises at least one of the following:
invoking, by the second device, an associated base station of the first device, and performing a second process on the first device through the associated base station, wherein the second process comprises at least one of the following: reading the first information, writing the first information, inventorying the first information, supplying electric energy to the first device, controlling a first device satisfying sensing conditions corresponding to the sensing demand information to be in an active state, and controlling a first device not satisfying the sensing conditions to be in an inactive state, wherein the first device is located within a read-write range of the associated base station; and
performing, by the second device, a first process on the pre-stored first information, wherein the first process comprises: at least one of updating, deleting, and adding.

24. The method according to any one of claims 16 to 23, wherein the method further comprises:
acquiring, by the second device, a reference measurement quantity or a reference measurement result,
wherein the reference measurement quantity is a measurement quantity that is transmitted by the wireless sensing signal receiver and the wireless sensing signal transmitter and obtained by the first device performing a reference sensing process, and the target sensing result is determined based on the target measurement quantity and the reference measurement quantity.

25. The method according to claim 24, wherein the acquiring, by the second device, a reference measurement quantity or a reference measurement result comprises:
acquiring, by the second device, a pre-stored reference measurement quantity or reference measurement result from at least one of the following:
the wireless sensing signal transmitter, the wireless sensing signal receiver, the first device, a network-side device accessed by the wireless sensing signal transmitter, a network-side device accessed by the wireless sensing signal receiver, a network-side device or terminal accessed by the first device, and a target core network element.

26. The method according to any one of claims 16 to 23, wherein the acquiring, by a second device, sensing demand information comprises:
acquiring, by the second device, sensing demand information transmitted or forwarded by a target core network element, wherein the target core network element comprises: an application server, an access and mobility management function (AMF) network element, or a network management system.

27. The method according to any one of claims 16 to 23, wherein before the transmitting, by the second device, second information to at least one of a wireless sensing signal transmitter and a wireless sensing signal receiver, the method further comprises:
acquiring, by the second device, target capability information, wherein the target capability information comprises at least one of capability information of the wireless sensing signal transmitter, capability information of the wireless sensing signal receiver, and capability information of the first device;
determining, by the second device, sensing signal related configuration information according to the target capability information and the sensing demand information;
or,
transmitting, by the second device, first recommendation information to the wireless sensing signal transmitter according to the sensing demand information, and receiving the sensing signal related configuration information from the wireless sensing signal transmitter;
or,
receiving, by the second device, second recommendation information from the wireless sensing signal transmitter, and determining the sensing signal related configuration information according to the second recommendation information and the sensing demand information;
or,
receiving, by the second device, first configuration information from the wireless sensing signal transmitter, and determining second configuration information according to the sensing demand information, wherein the sensing signal related configuration information comprises the first configuration information and the second configuration information.

28. The method according to claim 27, wherein the sensing signal related configuration information comprises at least one of the following:
a waveform, a sub-carrier interval, a guard interval, a bandwidth, a burst (burst) duration, a time domain interval, a transmitting signal power, a signal format, a signal direction, a time resource, a frequency resource, a quasi co-location (QCL) relationship, identification information of the first device, information related to sensing signal configurations of the first device, an initial phase of the sensing signal, antenna information of the first device, antenna information of the wireless sensing signal transmitter, timestamp information of each antenna transmitting the sensing signal, a time interval of transmitting signals between different antennas, an amplitude modulation capability of the first device, a phase modulation capability of the first device, a frequency modulation capability of the first device, an encryption algorithm type of the first device, an encoding rate corresponding to a channel encoding type of the first device, a signal modulation mode related to the first device, a data encoding mode related to the first device, and a frame format related to the first device.

29. The method according to any one of claims 16 to 23, wherein the target measurement quantity comprises:
a first measurement quantity, wherein the first measurement quantity is a measurement quantity related to the first device and comprises at least one of the following:
a received signal strength indicator (RSSI) and/or received power of a reflected signal backscattered by the first device, a phase of the reflected signal, timestamp information of the reflected signal, a backscattered path channel matrix of the first device, backscattered path channel state information of the first device, multipath number parameters in a backscattered path multipath channel of the first device, a Doppler frequency and Doppler spread of the reflected signal, an angle of departure of the reflected signal, an angle of arrival of the reflected signal, a phase difference between the first devices, a delay difference between the first devices, a phase difference between antennas of the first device, a delay difference between the antennas of the first device, and unique identification information of the first device.

30. The method according to claim 16, wherein the transmitting, by the second device, second information to at least one of a wireless sensing signal transmitter and a wireless sensing signal receiver comprises:
transmitting, by the second device, second information to the wireless sensing signal transmitter, wherein the wireless sensing signal transmitter is configured to forward the second information to the wireless sensing signal receiver;
or,
transmitting, by the second device, second information to the wireless sensing signal transmitter, and transmitting measurement demand information to the wireless sensing signal receiver, wherein the measurement demand information represents a sensing signal related measurement quantity to be measured by the wireless sensing signal receiver.

31. The method according to claim 16, wherein the acquiring, by the second device, at least one of a target measurement quantity and a target sensing result comprises at least one of the following:
receiving, by the second device, a target measurement quantity from the wireless sensing signal receiver or the wireless sensing signal transmitter, and transmitting the target measurement quantity to a core network or an application server, wherein the target sensing result is determined by the core network or the application server based on the target measurement quantity;
receiving, by the second device, a target measurement quantity from the wireless sensing signal receiver or the wireless sensing signal transmitter, and determining the target sensing result according to the target measurement quantity; and
receiving, by the second device, a target sensing result from the wireless sensing signal transmitter, the wireless sensing signal receiver, a network-side device accessed by the wireless sensing signal receiver, or a network-side device accessed by the wireless sensing signal transmitter, wherein the target sensing result is determined by the wireless sensing signal transmitter, the wireless sensing signal receiver, the network-side device accessed by the wireless sensing signal receiver, or the network-side device accessed by the wireless sensing signal transmitter based on the target measurement quantity.

32. A wireless sensing apparatus, applied to a second device, the apparatus comprising:
a second acquisition module, configured to acquire sensing demand information;
a second transmitting module, configured to transmit second information to at least one of a wireless sensing signal transmitter and a wireless sensing signal receiver, wherein the second information comprises: the sensing demand information and/or sensing signal related configuration information corresponding to the sensing demand information; and
a third acquisition module, configured to acquire at least one of a target measurement quantity and a target sensing result, wherein the target measurement quantity is a measurement quantity obtained by the wireless sensing signal receiver measuring a sensing signal that is transmitted by the wireless sensing signal transmitter and at least partially backscattered by the first device, and the target sensing result is determined based on the target measurement quantity.

33. A wireless sensing system, comprising: a first device, a wireless sensing signal transmitter, and a wireless sensing signal receiver, wherein
at least one of the wireless sensing signal transmitter and the wireless sensing signal receiver is configured to acquire second information, wherein the second information comprises: the sensing demand information and/or sensing signal related configuration information corresponding to the sensing demand information;
the wireless sensing signal transmitter is configured to determine the sensing signal related configuration information according to the sensing demand information, and transmit a sensing signal according to the sensing signal related configuration information, or, the wireless sensing signal transmitter is configured to transmit a sensing signal according to the acquired sensing signal related configuration information;
the first device is configured to backscatter the sensing signal; and
the wireless sensing signal receiver is configured to measure the sensing signal that is transmitted by the wireless sensing signal transmitter and at least partially backscattered by the first device, so as to obtain a target measurement quantity.

34. The system according to claim 33, further comprising: a second device, wherein
the second device is communicatively connected to the wireless sensing signal transmitter, the wireless sensing signal receiver, and the first device, respectively; and
the second device is configured to acquire the sensing demand information and transmit the sensing demand information to at least one of the wireless sensing signal transmitter and the wireless sensing signal receiver, or determine the sensing signal related configuration information according to the sensing demand information and transmit the sensing signal related configuration information to at least one of the wireless sensing signal transmitter and the wireless sensing signal receiver.

35. The system according to claim 34, wherein the second device comprises at least one of the following:
a sensing functional entity or a sensing network element in a core network; and
a sensing functional entity or a sensing network element in an access network.

36. The system according to any one of claims 33 to 35, wherein the sensing signal transmitted by the wireless sensing signal transmitter is a preset sensing signal sequence, and the wireless sensing signal receiver is specifically configured to receive a target sensing signal sequence that is transmitted from the wireless sensing signal transmitter and at least partially backscattered by the first device, and to perform a target signal process based on the target sensing signal sequence and the preset sensing signal sequence to obtain a target measurement quantity, wherein the sensing signal related configuration information comprises signal configuration information of the preset sensing signal sequence.

37. The system according to claim 34 or 35, wherein the wireless sensing signal transmitter comprises a first network-side device or a first terminal, and the wireless sensing signal receiver comprises a second terminal.

38. The system according to claim 37, wherein a first node is configured to determine a target sensing result according to the target measurement quantity, wherein the first node comprises: at least one of the wireless sensing signal transmitter, the wireless sensing signal receiver, the second device, a network-side device accessed by the first terminal, or a network-side device accessed by the second terminal; or,
the wireless sensing system further comprises a target core network element, the first node is configured to transmit the target measurement quantity to the target core network element, and the target core network element is configured to determine a target sensing result according to the target measurement quantity.

39. The system according to claim 38, wherein a second node is configured to transmit a reference measurement quantity or a reference measurement result to the first node or a first core network element;
the first node or the first core network element determines a target sensing result according to the reference measurement quantity or the reference measurement result and the target measurement quantity, and the second node comprises: at least one of the wireless sensing signal transmitter, the wireless sensing signal receiver, the second device, a network-side device accessed by the first terminal or a network-side device accessed by the second terminal, the first device, and a network-side device or terminal accessed by the first device.

40. The system according to any one of claims 33 to 39, wherein the first device is attached to a sensing target corresponding to the sensing demand information, or the first device is located in a target sensing area corresponding to the sensing demand information.

41. A terminal, comprising a processor, a memory, and programs or instructions stored in the memory and executable on the processor, wherein the programs or instructions, when executed by the processor, implement steps of the wireless sensing method according to any one of claims 7 to 14.

42. A network-side device, comprising a processor, a memory, and programs or instructions stored in the memory and executable on the processor, wherein the programs or instructions, when executed by the processor, implement steps of the wireless sensing method according to any one of claims 7 to 14, or implement steps of the wireless sensing method according to any one of claims 16 to 31.

43. A readable storage medium, storing programs or instructions, wherein the programs or instructions, when executed by a processor, implement steps of the wireless sensing method according to any one of claims 1 to 5, implement steps of the wireless sensing method according to any one of claims 7 to 14, or implement steps of the wireless sensing method according to any one of claims 16 to 31.
